# FASCICULE DE BREVET EUROPEEN

(11) **EP 0 077 744 B1**
(45) Date de publication et mention de la délivrance du brevet: **19.02.1986**
(21) Numéro de dépôt: 82420135.4
(22) Date de dépôt: 28.09.1982
(51) Int. Cl.: C08G 77/42, C08G 18/61, C08G 18/77, C08G 77/38

(54) **Copolymères séquencés polysiloxaniques et polyuréthannes utilisables notamment comme élastomères thermoplastiques**
Blockcopolymere die Polysiloxan- und Polyurethanblöcke enthalten; deren Anwendung wie thermoplastische Elastomeren
Block copolymers containing polysiloxane and polyurethane blocks; their use as thermoplastic elastomers

(30) Priorité: 30.09.1981 FR 8118573
(43) Date de publication de la demande: 27.04.1983
(73) Titulaire: RHONE-POULENC SPECIALITES CHIMIQUES, 92400 Courbevoie (FR)
(72) Inventeur: Cavezzan, Jacques, F-69100 Villeurbanne (FR); Prud'Homme, Christian, F-69006 Lyon (FR)
(74) Mandataire: Chichery, Guy

## Description

La présente invention concerne de nouveaux élastomères thermoplastiques à base de silicones, qui sont des copolymères séquencés comportant des groupements polysiloxaniques et uréthannes. L'invention concerne également le procédé d'obtention de ces copolymères.

On connait déjà élastomères silicones thermoplastiques tels que par exemple ceux décrits dans les brevets français 2 300 778; 2 362 183; 2 414 519 et demande française 78/26245 au nom de la demanderesse. Ces élastomères sont obtenus par réaction d'hydrosilylation entre un composé difonctionnel, α,ω-bis-vinylsilylé et un α,ω-dihydrogénopolysiloxane. Pour accéder aux élastomères il est donc nécessaire de préparer in- termédiairement le composé difonctionnel α,ω-bis-vinylsilylé, ce dernier étant lui-même obtenu à partir de silane insaturé et d'agent de couplage. C'est pourquoi l'accés à ces copolymères organo- siliciques thermoplastiques peut se révéler relativement coûteux, ce qui constitue une entrave pour le développement économique des dits élastomères.

On connait d'autre part de nombreux copolymères séquencés à groupements polysiloxaniques et qui comportent d'autres groupements divers tels que polyester, polyéther, polyuréthane... On connait ainsi des copolymères polysiloxanes polyuréthannes tels que décrits dans les brevets français 1 370 886; 1 371 405 et dans le brevet russe 262 385. Ces copolymères conduisent à des corps solides n'ayant pas ou très peu de caractère élastomérique.

Les copolymères séquencés de l'art antérieur sont obtenus soit en faisant réagir un polyisocy- anate organique avec des «macrodiols» porteurs I 3/0 888; brevet russe 202 385; article vysoko- mol soedin série B, 14, 9 p. 682 684 (1972) ...], soit par condensation entre en diol organique «court» et un α,ω-bis(isocyanatoalkyl)polysiloxane (brevet français 1 371 405 ...)

Lors de ses travaux la demanderesse a vite mis en évidence que les divers procédés de l'art antérieur ne permettaient pas de préparer des copolymères à groupements polysiloxaniques et polyuréthannes possédant des propriétés élastomériques valables. Cette constatation semble être la conséquence de l'incompatibilité observée entre les segments polysiloxaniques longs et les segments uréthannes. En d'autres termes l'allongement de la séquence polysiloxanique rendu nécessaire afin d'obtenir de bons élastomères entrai- nait l'apparition d'une hétérogénéité dans le milieu lorsqu'on mettait en réaction un macrodiol (ou un macrodiisocyanate) comportant un enchainement polysiloxanique long et un polyisocy- anate court (ou polyol court).

Par ses efforts la demanderesse a réussi à préparer des copolymères séquencés polysiloxanes polyuréthannes ayant des bonnes propriétés élastomériques. Un tel résultat en dépendance étroite avec la nature des diverses séquences du copolymère et du milieu réactionnel n'était des diverses séquences du copolymère et du milieu réactionnel n'était pas évident au vu de l'art antérieur.

Il a été maintenant trouvé et c'est ce qui constitue l'objet de la présente invention des nouveaux copolymères séquencés organopolysiloxaniques et polyuréthannes constitués par un enchainement de motifs récurrent A et B ayant respectivement pour formule: 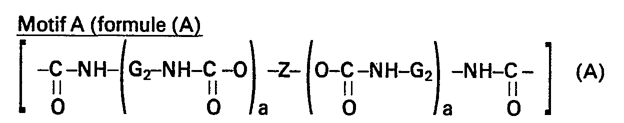 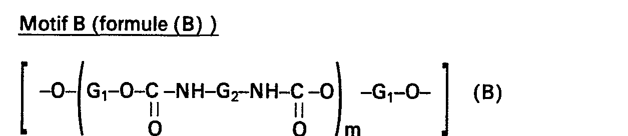 les divers symboles ayant les significations suivantes:

. Z représente un radical divalent porteur d'un bloc polysiloxanique et ayant pour formule: 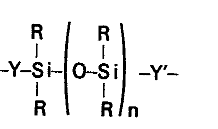 les divers symboles Y, Y', R, et n représentant respectivement:

. Y un radical divalent inerte de nature hydrocarbonée et choisi parmi les groupements suivants:

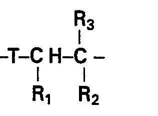

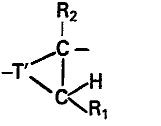

T et T' représentant respectivement des radicaux divalents et trivalents inertes faisant partie de l'édifice moléculaire d'isocyanate insaturé ou d'alcool insaturé de formule: 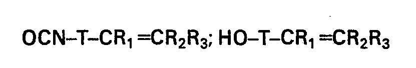 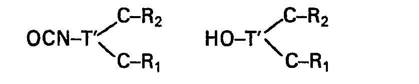 ces radicaux T et T'étant de nature hydrocarbonée et comportant de 1 à 20 atomes de carbone et pouvant éventuellement renfermer un ou plusieurs hétéroatomes ou groupements choisis parmi les atomes d'oxygène, de soufre, de silicium et d'azote, les groupements ester ou amide; les symboles R₁, R₂, R₃ représentant un atome d'hydrogène, un groupement alkyle ou aryle, les deux radicaux R₁ et R₂ pouvant ensemble constituer un radical alkylène.

Y' un groupement ayant la même signification que le groupe ment Y.
. R des radicaux identiques ou différents choisis parmi:
- Les radicaux alkyle ou halogénoalkyle ayant de 1 à 5 atomes de carbone et comportant de 1 à 7 atomes de chlore et/ou de fluor.
- Les radicaux cycloalkyle ou halogénocycloal- kyle ayant de 3 à 8 atomes de carbone et contenant de 1 à 4 atomes de chlore et/ou de fluor.
- Les radicaux aryle, alkylaryle et halogènoaryle ayant de 6 à 8 atomes de carbone et contenant de 1 à 4 atomes de chlore et/ou de fluor.
- Les radicaux cyano-alkyle ayant de 3 à 4 atomes de carbone.
· n un nombre égal ou supérieur à 10.

G, G₂ des radicaux divalents de nature hydrocarbonée correspondant respectivement au diol G₁ (OH)₂ et au diisocyanate G₂ (NCO)₂, G, et G₂ ayant de 2 à 20 atomes de carbone.
· m un nombre compris entre 1 et 20
a zéro ou 1

A titre préférentiel et c'est ce qui constitue également un objet de la présente invention on revendique les nouveaux copolymères séquencés selon la revendication 1 constitués par un enchaînement de motifs récurrents A et B, les divers symboles ayant les significations suivantes:
· T représentant l'un des groupements suivants:
- Un groupement purement hydrocarboné alkylène, cycloalkylène arylène, alkylarylène ou arylalkylène.
- Un enchainement de deux groupements choisis parmi les groupements alkylène, cycloalkylène et arylène et reliés entre eux par le lien valentiel, un atome d'oxygène, un atome de soufre, un groupement ester ou amide, un groupement azoté 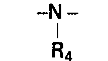 R₄ représentant un atome d'hydrogène ou un groupement alkyle, un groupement diorganosilyle de formule: 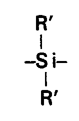 R' représentant un radical, méthyle, vinyle ou phényle. Ces divers radicaux étant éventuellement halogènés.
· T' un groupement alkane triyle, cycloalkane triyle, alkylcycloalkanetriyle.
· R₁ R₂, R₃ Un atome d'hydrogène, un radical alkyle ayant de 1 à 4 atomes de carbone, un radical phényle ou tolyle, R₁ et R₂ pouvant constituer ensemble un radical divalent alkylène droit ou ramifié ayant de 2 à 6 atomes de carbone.
· G, Des radicaux alkylène ayant de 2 à 12 atomes de carbone, des radicaux cyclohexylène ou cyclopentylène, un ensemble de 2 groupements choisis parmi les groupements alkylène ayant de 2 à 12 atomes de carbone ou les radicaux cyclohexylène ou cyclopentylène, reliés entre eux par le lien valentiel, un atome d'oxygène, un groupement alkylène ou alkylidène ayant de 1 à 4 atomes de carbone.
· G₂ Des radicaux alkylène ayant de 2 à 12 atomes de carbone, des radicaux cyclohexylène ou cyclopentylène, phénylène, méthylphénylène ou diméthylphénylène ou encore un ensemble de deux groupements choisis parmi les groupements alkylène ayant de 2 à 12 atomes de carbone, les radicaux cyclohexylène, cyclopentylène, phenylè- ne, méthylphénylène ou diméthylphénylène reliés entre eux par le lien valentiel, un atome d'oxygène, un groupement alkylène ou alkylidène ayant de 1 à 4 atomes de carbone.
. n Un nombre compris entre 10 et 80
· m étant compris entre 4 et 10
· a et R ayant les significations préalablement données respectivement p. 4 et 3

Parmi les copolymères séquencés de motifs (I) et (II) on mentionnera tout particulièrement ceux dont les symboles représentatifs ont les significations qui vont être maintenant définies. Ces copolymères qui constituent également un objet de la présente invention sont caractérisé en ce que les divers symboles ont les significations suivantes:
· T représente l'un des groupements suivants:
- Un groupement alkylène ayant au plus 12 atomes de carbone, un groupement cyclopentylène ou cyclohexylène, un groupement phénylène, méthylphénylène ou diméthylphénylène.
- Un ensemble de deux groupements choisis parmi les groupements alkylène ayant de 2 à 12 atomes de carbone, cyclohexylène, cyclopentylène, phénylène, méthylphénylène, diméthylphénylène, les deux groupements de l'ensemble étant reliés par le lien valentiel ou par l'un des hétéroatomes ou groupements suivants:

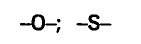

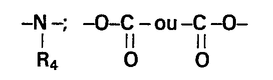

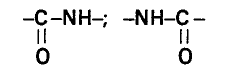

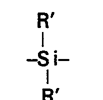

R₄ représentant un atome d'hydrogène ou un groupement alkyle ayant de 1 à 4 atomes de carbone, et R' représentant un groupement méthyle, vinyle ou phényle. · T' le groupement 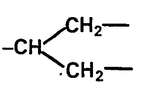
. R₁ R₂, R₃ - un atome d'hydrogène ou un groupement méthyle, éthyle ou phényle, les deux radicaux R₁ et R₂ pouvant constituer ensemble un groupement triméthylène ou tétraméthylène.
. R Un radical méthyle, vinyle, ou phényle, ces radicaux pouvant éventuellement être substitués par 1 à 4 atomes de chlore et/ou de fluor.
· G₁ Des radicaux alkylène ayant de 2 à 6 atomes de carbone, des radicaux cyclopentylène, cyclohexylène, ou encore un ensemble de 2 groupements choisis parmi les groupements alkylène ayant de 2 à 6 atomes de carbone; les radicaux cyclohexylène ou cyclopentylène reliés entre eux par le lien valentiel, un atome d'oxygène, un groupement méthylène.
· G₂ Des radicaux alkylène ayant de 2 à 6 atomes de carbone, des radicaux cyclopentylène, cyclohexylène, phènylène ou méthylphénylène ou encore un ensemble de 2 groupements choisis parmi les groupements alkylène ayant de 2 à 6 atomes de carbone, les radicaux cyclohexylène, cyclopentylène, phénylène, méthylphénylène reliés entre eux par le lien valentiel, un atome d'oxygène, un groupement méthylène.

Les autres symboles n, a, m ayant les significations préalablement données p. 5.

Enfin à titre avantageux et c'est ce qui constitue également un objet de la présente invention on revendique les nouveaux copolymères constitués des motifs A et B caractérisés en ce que les divers symboles des formules (A) et (B) ont les significations suivantes:
· Y représente le groupement divalent suivant: 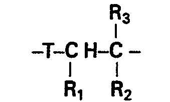 T, représentant soit un groupement alkylène ayant au plus 12 atomes de carbone, un groupement cyclopentylène, cyclohexylène, phénylène ou méthylphénylène, soit un ensemble de deux groupements choisis parmi les groupements alkylène de 2 à 12 atomes de carbone, cyclohexylène, cyclopentylène, les deux groupements étant reliés par le lien valentiel ou par l'un des hétéroatomes ou groupements suivants: 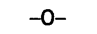 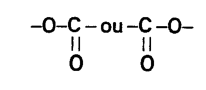 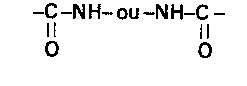 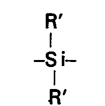
R' représentant un groupement méthyle, et
· R_{1'} R₂, R₃ un atome d'hydrogène, un groupement méthyle, éthyle ou phényle, les deux radicaux R₁ et R₂ pouvant constituer ensemble un groupementtriméthylène ou tétraméthylène.
· R Un radical méthyle.
· G₁ Un radical alkylène droit ayant de 4 à 6 atomes de carbone.
· G₂ Des radicaux alkylène ayant de 2 à 6 atomes de carbone, des radicaux cyclopentylène, cyclohexylène, phénylène ou un ensemble de 2 groupements choisis parmi les groupements alkylène ayant de 2 à 6 atomes de carbone, cyclohexylène, cyclopentylène.

Les autres symboles n, a, m aynat les significations préalablement données p. 5.

A titre illustratif on indiquera parmi les copolymères séquencés de motifs (A) et (B) selon l'invention ceux dont les divers symboles ont les significations précises suivantes: groupement 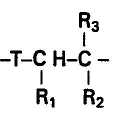 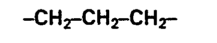 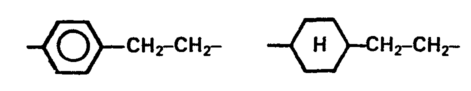 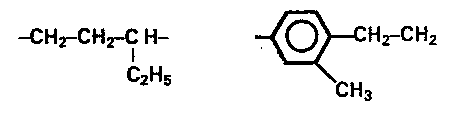 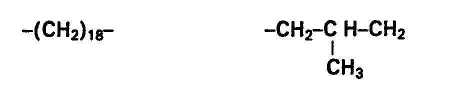 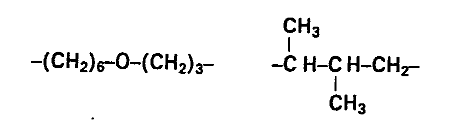 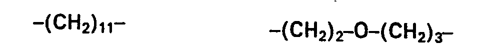 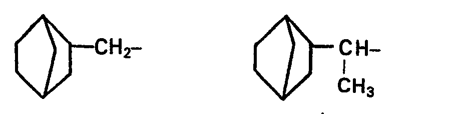 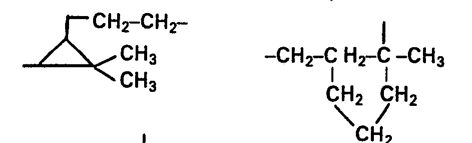 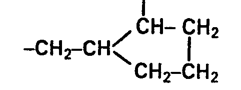 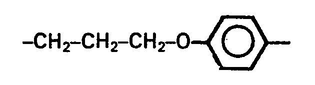 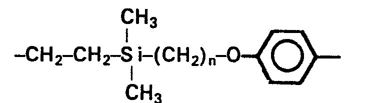 avec n égal à 1, 2 ou 3 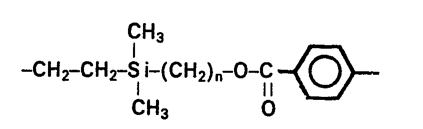 avec n égal à 1,2 ou 3 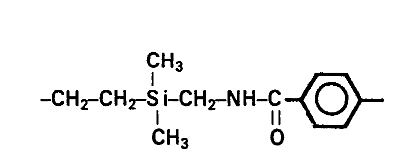 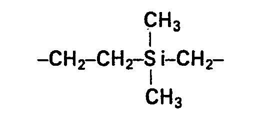 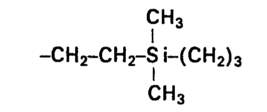 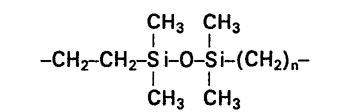 avec n =1, 2 ou 3 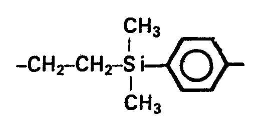 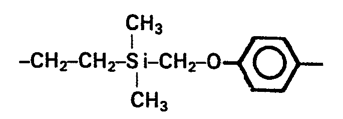 symbole Y:

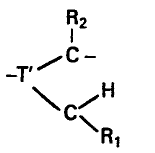

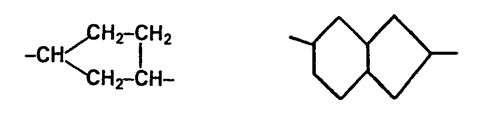

### symbole R:

Les groupes méthyle; éthyle; propyle; isopropy- le; butyle; isobutyle; a-pentyle; t-butyle; chloro- méthyle; dichlorométhyle; a-chloroéthyle; α,β-dichloroéthyle; fluorométhyle; difluorométhyle; α,β-difluoroéthyle; trifluoro-3,3,3 propyle; trifluoro cyclopropyle; trifluoro-4,4,4 butyle; heptafluo- ro-3,3,3,4; 4,5,5-pentyle; β-cyanoéthyle; γ-cya- nopropyle; phényle; p-chlorophényle; m-chlorophényle; dichloro-3,5 phényle; trichlorophényle; tétrachlorophényle; o-, p-, ou m-tolyle; a,a,a-tri- fluorotolyle; xylyles comme diméthyl-2,3 phényle; diméthyl-3,4 phényle.

Préférentiellement les radicaux organiques liés aux atomes de silicium sont des radicaux méthyle; phényle, vinyle, ces radicaux pouvant être éventuellement halogénés ou bien encore des radicaux cyanoalkyle. symbole G₁: 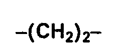 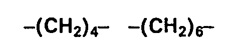 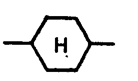 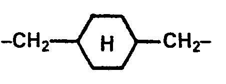 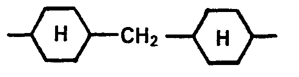 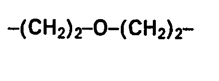 symbole G₂:

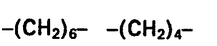

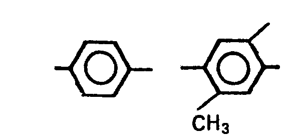

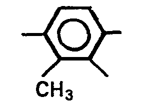

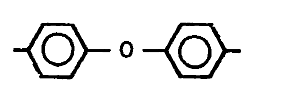

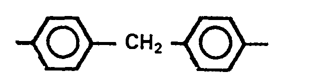

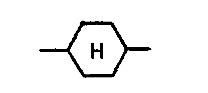

Parmi toutes les illustrations des divers symboles, on mentionnera tout particulièrement les copolymères pour lesquels les symboles G₁ et G₂ représentent un groupement hexaméthylène.

Enfin on précisera que les nombres n et m ne sont pas obligatoirement des nombres entiers puisque les motifs A et B correspondent en général à une formule moyenne des dits motifs.

Un autre objet de la présente invention est constitué par un procédé d'obtention des copolymères séquencés polysiloxaniques et polyuréthannes et constitués par un enchainement des motifs récurrents de formule (A) et (B); ce procédé est caractérisé en ce que l'on fait réagir dans un milieu solvant constitué par un hydrocarbure halogéné un composé difonctionnel de formule: (I) X-Z-X' avec au moins un diol de formule (II) HO-G₁-OH et avec au moins un diisocyanate de formule (III) OCN-G_{z}-NCO, les symboles X et X' identiques représentant un groupement hydroxyle ou un groupement isocyanate, les divers symboles Z, G₁, G₂ ayant les significations données précédement, les composés de formule (I), (II) et (III) étant introduits en quantité telle que le rapport de l'ensemble des groupements NCO par rapport à l'ensemble des groupements OH soit compris entre 0,9 et 1,1 et en ce que le rapport molaire: 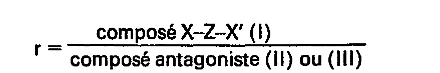 soit compris entre 0,045 et 0,5, le composé antagoniste étant tel qu'il réagisse avec le composé (I) pour former les deux groupes uréthannes de jonction.

C'est ainsi que lorsque le composé X-Z-X' est un macrodiisocyanate porteur du bloc polysiloxanique c'est le diol (II) qui est le composé antagoniste, et il apparaît aisément pour le spécialiste, que le rapport global nombre de NCO totaux/ nombre d'OH totaux étant fixé, c'est la connaissance des rapports molaires des réactifs et par exemple celle du rapport molaire macrodiisocya- nate/diol court qui va permettre de déterminer la valeur de m et par là la longueur du segment rigide.

La répartition molaire des diverses espèces, composé difonctionnel (I), diol HO-G₁-OH, diisocyanate OCN-G₂-NCO va donc déterminer le poids moléculaire en nombre, la répartition entre les segments souples (polysiloxaniques) et les segments rigides (uréthanne) et la longueur du segment rigide. C'est cette répartition qui permet d'obtenir des élastomères thermoplastiques de bonne qualité.

Le composé difonctionnel de formule (I) qui peut être le diisocyanate (I)ₐ 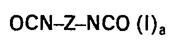 porteur du bloc polysiloxanique ou qui peut être lediol (I)_{b} 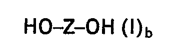 porteur du bloc polysiloxanique est lui-même obtenu par réaction d'hydrosilation entre un α,ω dihydrogénopolysiloxane de formule (IV) 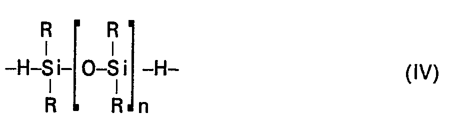 et un composé oléfinique porteur d'un groupement isocyanate ou hydroxyle. Le procédé d'obtention de ces composés difonctionnels (I)ₐ et (I)_{b} sera défini plus loin.

Préférentiellement et c'est ce qui constitue un objet de la présente invention, les élastomères polysiloxaniques et polyuréthannes sont préparé selon un procédé tel que précédemment défini et caractérisé en ce que le rapport de l'ensemble des groupements NCO par rapport à l'ensemble des groupements OH soit compris entre 0,95 et 1,05 et en ce que le rapport molaire r soit compris entre 0,08 et 0,170.

Il doit de plus être entendu que les procédés d'obtention des élastomères polysiloxaniques et polyuréthannes qui correspondent à l'une des catégories préférentielles ou avantageuses de copolymères telles que précédemment définies, constituent également un objet de la présente invention. Avantageusement on met en oeuvre en tant que composé difonctionnel 1, un diisocyanate porteur du bloc polysiloxanique.

Comme on l'a déjà dit, la réaction de polycondensation entre le composé difonctionnel (I) porteur du bloc polysiloxanique, le diol (II) et le diisocyanate (III) doit être réalisée dans un milieu assurant la compatabilité entre les segments polysiloxaniques et les segments uréthannes.

Cette compatibilité est obtenue essentiellement par le choix de solvants définis permettant d'obtenir un milieu homogène ou sensiblement homogène durant la réaction de polycondensation. L'existence d'un milieu totalement homogène durant toute la réaction de polycondensation n'est pas cependant obligatoire. Certains milieux qui se troublent durant la réaction de polycondensation conduisent cependant à des copolymères séquencés ayant des bonnes propriétés élastomériques.

La compatibilité du milieu réactionnel est essentiellement assurée par le choix de solvants définis comme on l'a déjà dit mais il doit être également entendu que c'est aussi le choix de la nature des diverses séquences rigides et souples qui contribue aussi à obtenir cette compatibilité.

Les solvants assurant essentiellement cette compatibilité sont des hydrocarbures halogénés aliphatiques ou aromatiques. Parmi ceux-ci on mentionnera tout particulièrement l'o-dichlorobenzène et le tétrachloréthane.

La quantité de solvant utilisé peut varier dans de larges limites, celle-ci est habituellement comprise entre 50% et 95% et préférentiellement entre 70% et 80% par rapport à la masse totale des réactifs.

La réaction de polycondensation peut être effectuée en absence ou en présence de catalyseur. Tout catalyseur classique bien connu dans la chimie de la réaction entre un groupement isocyanate et un groupement hydroxyle peut convenir; parmi ceux-ci on peut citer les dérivés de métaux lourds comme le dilaurate de dibutylétain.

La réaction de polycondensation conduisant au copolymère séquencé est effectuée par simple chauffage des réactifs à une température en général comprise entre 110° et180° et préférentiellement entre 120 et 160°. On peut éventuellement fractionner l'introduction des divers réactifs. La réaction étant achevée, le copolymère est séparé du milieu réactionnel par tout moyen connu par exemple par précipitation consécutive à l'addition d'un non solvant comme un alcool, par exemple le méthanol, l'éthanol, le butanol) ou une cétone. On peut également obtenir le copolymère séquencé par simple élimination du solvant par exemple par évaporation.

Lorsque l'on introduit à titre de composé difonctionnel (I) un diol porteur du bloc polysiloxanique, on opère avantageusement en deux temps. Durant la première étape on ajoute dans le milieu réactionnel constitué par le composé (I) et le solvant, une fraction ou la totalité du diisocyanate (III) de manière à former un «macrodiisocyanate» porteur du bloc polysiloxanique. Dans une deuxième étape on introduit le restant des réactifs. Si on désire mettre en oeuvre un diisocyanate porteur du bloc polysiloxanique, on préparera ce dernier par exemple par réaction entre un α,ω-dihydrogénopolysiloxane et un monoisocyanate porteur d'une insaturation éthylénique et ayant l'une des formules suivantes: 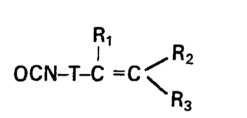 ou

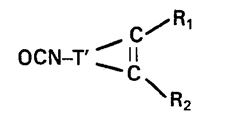

L'isocyanate insaturé peut donc avoir une structure aliphatique alicyclique, cyclique ou bicyclique. Il est facile de déterminer la nature précise des divers isocyanates utilisables compte-tenu que les significations des divers symboles T, T', R" R₂, R₃ ont déjà été indiquées.

Parmi les isocyanates insaturés on citera à titre purement illustratif les composés de formule suivantes:

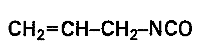

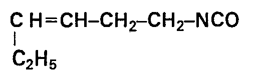

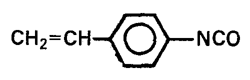

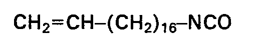

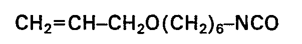

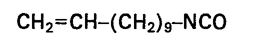

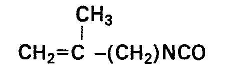

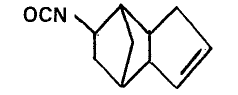

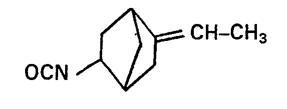

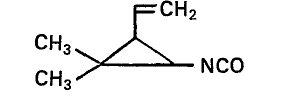

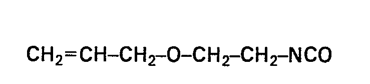

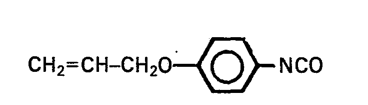

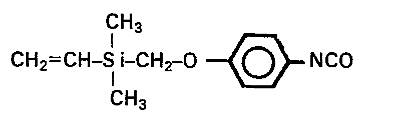

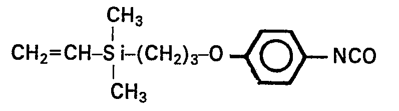

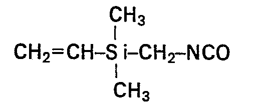

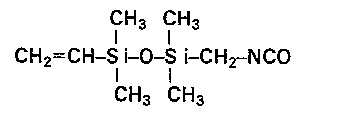

Le composé difonctionnel (I_{b}) porteur du bloc polysiloxanique peut être obtenu par réaction d'hydrosilylation entre 1'α,ω-dihydrogénopolysiloxane de formule (IV) et un monoalcool porteur d'une insaturation éthylénique et ayant l'une des formules suivantes:

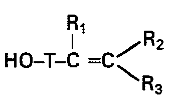

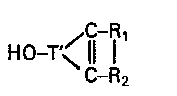

L'alcool insaturé peut donc avoir une structure aliphatique, alicyclique, cyclique, ou bicyclique. Il peut s'agir d'un alcool primaire ou secondaire, mais préférentiellement il s'agira d'un alcool primaire. Il est facile de déterminer la nature précise des divers alcools insaturés utilisables compte-tenu du fait que les significations des divers symboles T, T', R₁, R₂, R₃ ont déjà été indiquées.

Parmi les alcools insaturés on citera à titre purement illustratif les composés de formules suivantes:

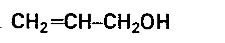

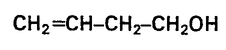

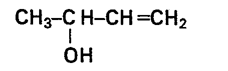

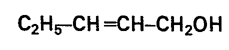

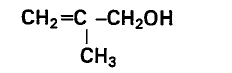

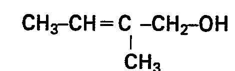

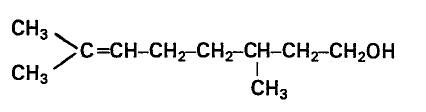

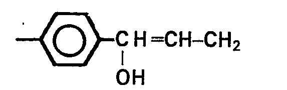

La réaction d'hydrosilylation entre le composé fonctionnel insaturé et l'a,e)-dihydrogénopolysiloxane est effectuée selon toute technique connue (ch. par exemple W. Noll: Chemistry and techno- logy of silicones (1968) pages 49 et suivantes).

Ainsi la réaction d'hydrosilylation peut être conduite par chauffage des réactifs entre 150 et 350 °C sous pression autogène, en absence de catalyseurs. On peut également opérer en présence des catalyseurs usuels, ce qui permet l'utilisation de températures moins élevées, de l'ordre de 0 à 200 °C et un déroulement plus rapide de la réaction à pression normale.

Comme catalyseurs on peut faire appel à des générateurs de radicaux libres tels que les composés peroxydiques (peroxydes d'acyle; peroxydes d'alkyle, peresters). Comme espèces illustrativs de ces composés on peut citer: le peroxyde de benzoyle, le peroxyde d'acétyle, le peroxyde de lau- royle, le perbenzoate de t-butyle; le peracétate de t-butyle et le peroxyde de t-butyle. Le même effet est obtenu quand on opère sous irradiation ultraviolette au lieu de conduire la réaction en présence de catalyseurs générateurs de radicaux libres.

Un autre groupe de catalyseurs auxquels on peut avoir recours pour préparer les composés difonctionnels de formule (I), est constitué par les métaux du groupe VIII de la classification périodique des éléments (cf. Handbook of Chemistry and Physics, 53ème Ed.) et leurs dérivés minéraux ou organiques. Parmi ces métaux on peut citer notamment Pt Ru, Rh, Pd, Ir. Les métaux nobles conviennent particulièrement bien, et tout spécialement le platine. Ils peuvent être utilisés sous forme élémentaire ou sous forme de sels d'acides minéraux, en particulier d'halogénures, de sels d'acides organiques ou de complexes. De tels catalyseurs ont été décrits dans la littérature cf. par exemple: brevets américain 2 637 738 et 2 632 013; J.L. SPEIER et al J. Am. Chem. Soc. 79, p. 974 et suivantes (1957); A.J. CHALK et al J. Am. Chem. Soc. 87,16 (1965).

Parmi ces catalyseurs à base de métaux du groupe VIII, ceux à base de platine conviennent tout particulièrement bien et sont mis en oeuvre de façon préférentielle. Ils peuvent prendre diverses formes bien connues dans la littérature technique. Ainsi on peut utiliser les divers catalyseurs à base de platine élémentaire finement divisé déposé ou non sur des supports variés tels que le noir de carbone, l'alumine, la silice; des catalyseurs de ce type ont été décrits notamment dans le brevet américain 2 970 150. Une autre famille de catalyseurs au platine est constituée par l'acide chloroplatinique (cf. brevet américain 2823218) et les composés qui en dérivent, tels que les chlo- roplatinates alcalins (cf. J.L. SPEIER loc. cit.); des composés obtenus par réaction de l'acide chloroplatinique avec des alcools, des éthers ou des aldéhydes (cf. brevet américain 3 220 972), des oléfines (cf. brevet américain 3159601), le cyclopropane (cf. brevet américain 3159662). Peuvent également être utilisés les complexes des halogénures de platine avec des composés donneurs de doublets électroniques tels que les phosphines, par exemple le bis(tributylphosphino) dichloroplatine (II); le bis(triphénylphosphino) dichloroplatine (II) (cf. A.J. CHALK et al loc. cit.). Le platine élémentaire déposé sur carbone et l'acide chloroplatinique et ses dérivés sont les catalyseurs utilisés préférentiellement dans la présente invention.

La réaction d'hydrosilylation peut être conduite en absence de solvant ou par mise en contact des réactifs et éventuellement du catalyseur dans un milieu organique constitué par un solvant ou un diluant inerte dans les conditions de la réaction. A ce titre on peut notamment utiliser des hydrocarbures aliphatiques saturés, par exemple le pentane, l'hexane ou l'heptane; des hydrocarbures cycloaliphatiques saturés, par exemple le cyclohexane; des hydrocarbures aromatiques; (benzène, toluène); des hydrocarbures halogénés: (chloroforme, dichloroéthane, chlorobenzène); des esters: (acétate de méthyle, acétate d'éthyle, acétate de butyle). Le choix du milieu de la réaction dépend de la nature des réactifs de départ et de la température à laquelle se déroule la réaction. Cette dernière peut se dérouler en solution ou en suspension suivant qu'un ou les deux réactifs sont solubles ou insolubles dans le milieu choisi.

Les quantités relatives du composé monofonc- tionnel insaturé et de l'a,w-dihydrogénopolysiloxane, peuvent varier dans de larges limites. Ainsi la quantité relative des réactifs exprimés par le rapport du nombre des groupes alcényles au nombre des atomes d'hydrogène actifs apportés par les groupements hydrogénosilylés peut varier de 2 à 0,5. Cependant il est préférable que le rapport précédemment défini soit voisin de 1, un léger excès de l'un ou de l'autre des réactifs pouvant alors être utilisé. Ainsi le rapport groupe al- cényle/H peut varier entre 1,2 et 0,8.

Lorsqu'on utilise un catalyseur pour conduire la réaction d'hydrosilylation, la quantité mise en oeuvre peut varier dans de très larges limites suivant la nature des catalyseurs, la nature des réactifs engagés et les conditions de la réaction. Dans le cas où on met en oeuvre un générateur de radicaux libres on peut par exemple utiliser de 1 Q-4 à 0,1 mole de catalyseur par mole de composé, bien que l'on puisse sortir sans inconvénient de ces limites. Si le catalyseur est l'un des métaux cités plus haut ou un dérivé de ces métaux, notamment le platine, la quantité de catalyseur, exprimée en atome-gramme de métal par groupe alcényle présent dans le composé insaturé, peut varier entre 10-6 et 10-¹ atome-gramme de métal par groupe alcényle et de préférence entre 10-⁵ et 10-².

Ainsi qu'on l'a déjà indiqué, la température de la réaction peut varier dans de larges limites selon qu'on opère en présence ou non d'un catalyseur ou, dans le premier cas, suivant la nature et la quantité du catalyseur mis en oeuvre. Globalement la température peur varier entre 0 et 300 °C et préférentiellement entre 20 et 250 °C. L'emploi de catalyseurs au platine permet d'opérer à des températures de l'ordre de 10 à 200 °C. La réaction peut également être conduite à pression supérieure, inférieure ou égale à la pression atmosphérique.

Lorsque la réaction d'hydrosilylation est achevée, les composés difonctionnels (I) peuvent être séparés du milieu réactionnel puis purifiés par tout moyen connu.

Les copolymères selon l'invention se caractérisent à la fois par leurs bonnes propriétés élastomériques et leur aptitude à supporter des contraintes thermiques élevées. En effet, leur module élastique varie faiblement dans une plage de température allant de la température ambiante à des températures aussi élevés que 160. Ce résultat est particulièrement remarquable, compte-tenu du fait que les copolymères séquencés comprennent une «partie» non polydiméthylsiloxanique, celle-ci pouvant atteindre 50%.

Les copolymères séquencés, compte-tenu de leurs bonnes propriétés thermomécaniques et de leur qualité essentielle «silicone» peuvent être utilisés à titre d'additifs pour introduire les propriétés des silicones et améliorer les propriétés thermomécaniques de nombreux composés.

Les exemples qui suivent illustrent l'invention.

### Exemple 1

Préparation du copolymère séquencé constitué par un enchaînement des motifs récurrents suivants:

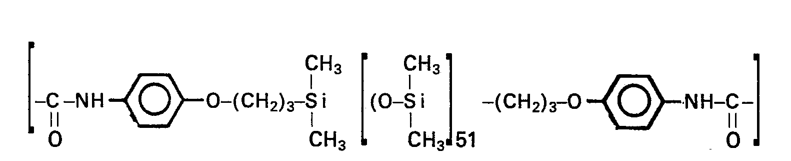

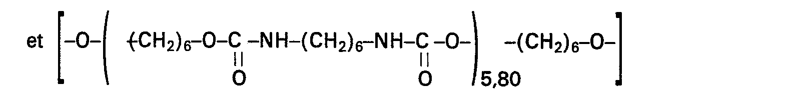

### Préparation du copolymère

Dans un réacteur contenant 80,5 g d'o-dichlorobenzène on introduit les réactifs suivants:
- bis α,ω [(p-isocyanatophénoxy)- 3-propyl] polydiméthyl-polysiloxane 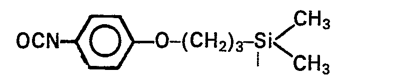 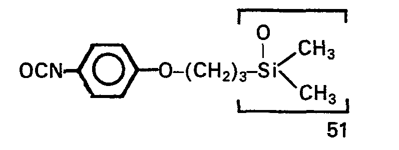 20,134 g (soit 0,00377 mole)
- hexanedioi -1,6: 3,030 g (soit 0,02568 mole)
- diisocyanato -1,6 hexane: 3,680 g (soit 0,02190 mole)

On calcule ainsi que le nombre r est égal à 0,147 et que le rapport NCO/OH est égal à 0,999. Le réacteur est purgé et maintenu sous atmosphère d'azote puis chauffé sous agitation durant 17 heures 40 minutes à 135 °C. On constate que le mélange demeure homogène pendant toute la durée de l'opération.

Le copolymère est isolé par précipitation dans le méthanol. Après lavage au méthanol (2 fois 400 ml) et séchage en étuve à 100° pendant 3 heures sous une pression de 26 mbar (20 mm de mercure) on obtient des flocons élastiques moulables par compression.

On place ainsi dans un moule paralléllipédique (L = 60 mm, 1 = 60 mm, h = 2 mm) 8 à 9 g de copolymère sec; le moule est alors mis sous presse pendant 10 à 15 minutes à 180 °C. On obtient des plaques transparentes de 2 mm d'épaisseur et qui présentent les propriétés suivantes:
- résistance à la rupture à 20°: 78 kg/cm²
- allongement à la rupture à 20°: 357%
- duretéshoreA:71

Jusqu'à 160 °C les copolymères conservent sensiblement leurs propriétés mécaniques.

### Préparation du bis α,ω-[(p-isocyanatophénoxy)-3- propyl] polydiméthylpolysiloxane

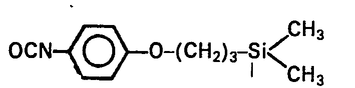

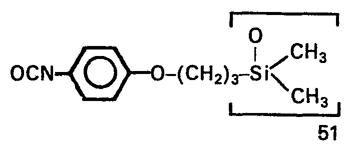

on charge dans un réacteur 40 g de toluène et 90 g d'α,ω-dihydrogénopolydiméthylsiloxane; 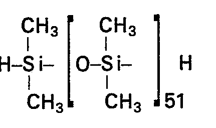 on chauffe à reflux et ajoute 16 g d'allyloxy-4 phénylisocyanate et 2 ml d'un catalyseur constitué par une solution d'acide chloroplatinique à 0,06% de Pt dans l'éthylhexanol. La durée totale de la réaction est de 5 h 20 min. Le taux de transformation des groupements Si-H est de 100%.

Après dévolatilisation pendant 45 minutes à 120-124° sous une pression de 2,6 mbar (2 mm de mercure), on obtient un composé conforme à la formule, contenant 0,0375% en groupement NCO et dont la masse moléculaire moyenne en nombre est de 5340.

### Exemple 2

Préparation du copolymère séquencé constitué par un enchaînement des motifs récurrents suivants:

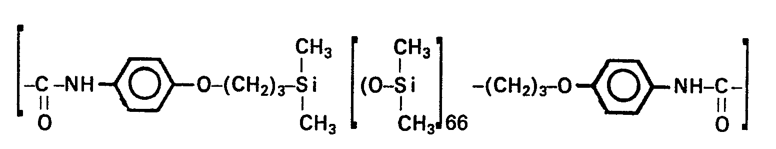

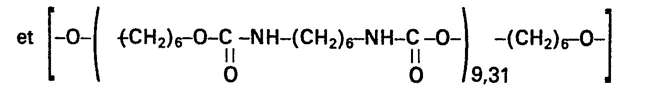

Le copolymère est préparé selon le mode opératoire décrit à l'exemple 1 à partir des charges suivantes:
- o-dichlorobenzène 88 g
- bis α, ω-[(p-isocyanatophénoxy)-3 propyl] polydiméthyl-polysiloxane 20,610 g soit 0,00317 mole)
- hexanediol -1,6 3,864 g (soit 0,03274 mole)
- diisocyanato -1,6 hexane 4,969 g (soit 0,02958 mole)

Le rapport r est égal 0,097 et le rapport NCO/ OH est égal à 1,000.

La condensation est effectuée durant 7 heures 10 minutes à 157 °C. En fin de réaction le mélange est légèrement trouble.

Le copolymère est isolé après précipitation par addition de méthanol. Les propriétés mécaniques des plaques obtenues après moulage sont les suivantes:
- résistance à la rupture à 20°: 74 kg/cm²
- allongement à la rupture à 20°: 256%
- dureté shore A: 66

### Exemple 3

Préparation du copolymre séquencé constitué par un enchaînement des motifs récurrents suivants: 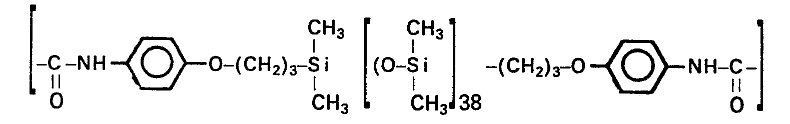 et

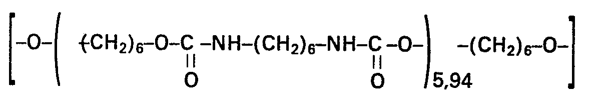

Le copolymère est préparé selon le mode opératoire décrit à l'exemple 1 à partir des charges suivantes:
- o-dichlorobenzène 60,1 g
- bis a, ω[(p-isocyanatophénoxy)-3 propyl] polydiméthylpolysiloxane: 14,006 g (soit 0,00329 mole)
- hexanediol -1,6: 2,706 g (soit 0,02293 mole)
- diisocyanato -1,6 hexane: 3,295 g (soit 0,01961 mole)

Le rapport r est égal à 0,143 et le rapport NCO/OH est égal à 0,998.

La condensation est effectuée durant 19 heures 30 minutes à 130 °C. En fin de réaction le mélange est limpide.

Le copolymère est isolé après precipitation par addition de méthanol. Les propriétés mécaniques sont les suivantes:
- résistance à la rupture à 20°: 79 kg/cm²
- allongement à la rupture à 20°: 159%

### Exemple 4

Préparation du copolymère séquencé constitué par un enchaînement des motifs récurrents suivants: 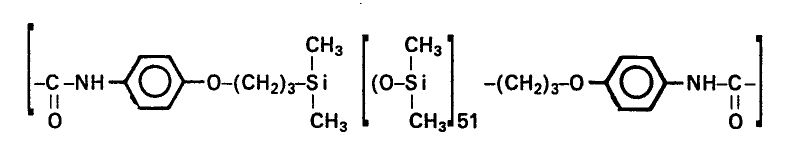 et

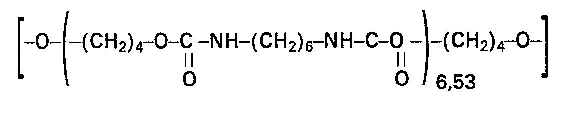

Le copolymère est préparé selon le mode opératoire décrit à l'exemple 1 à partir des charges suivantes:
- o-dichlorobenzène 70 g
- bis a, w-[(p-isocyanatophénoxy)-3 propyl] polydiméthylpolysiloxane 19,669 g (soit 0,00368 mole)
-butanediol -1,4 2,503 g (soit 0,02781 mole)
- diisocyanato -1,6 hexane 4,053 g (soit 0,02412 mole)

Le rapport r est égal à 0,132 et le rapport NCO/OH est égal à 0,999.

La condensation est effectuée durant 17 heures 35 minutes à 137-140 °C. En fin de réaction le mélange est légèrement trouble.

Le copolymère est isolé après précipitation par addition de méthanol. Les propriétés mécaniques des plaques obtenues après moulage sont les suivantes:
- résistance à la rupture à 20°: 70 kg/cm²
- allongement à la rupture à 20°: 204%
- dureté shore A: 73

### Exemple 5

Préparation du copolymère séquencé constitué par un enchainement des motifs récurrents suivants:

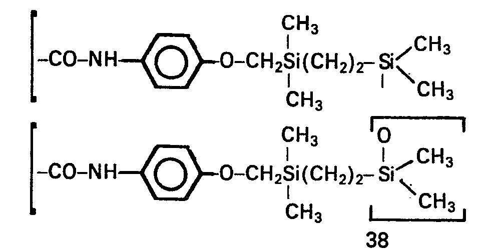

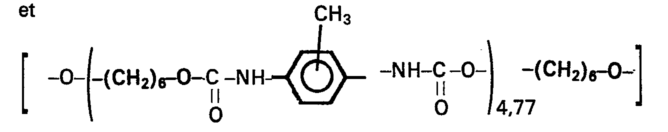

Dans un réacteur contenant 68,6 g d'o-dichlorobenzène on introduit les réactifs suivants:
bis a,ç[p-isocyanatophénylméthoxy[diméthyl- silyl- β éthyl)] polydiméthylpolysiloxane: 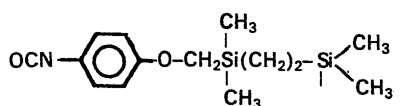 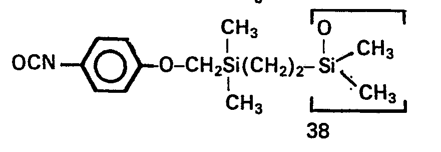 16,001 g (soit 0,00453 mole)
   - hexanediol-1,6 3,094 g (soit 0,02622 mole)
   - diisocyanato toluène (80/20) 3,764 g (soit 0,02163 mole)

On calcule ainsi que le nombre r est égal à 0,173 et que le rapport NCO/OH est égal à 0,998.

Le réacteur est purgé et maintenu sous atmosphère d'azote puis chauffé sous agitation durant 18 heures à 128-130 °C. On constate que le mélange devient légèrement trouble après 20 minutes de réaction.

Le copolymère est isolé après évaporation du solvant.

Après moulage on obtient des plaques transparentes de 2 mm d'épaisseur et qui présentent les propriétés suivantes:
- résistance à la rupture à 20°: 64 kg/cm²
- allongement à la rupture à 20°: 204%

### Exemple 6

Préparation du copolymère séquencé constitué par un enchaînement des motifs récurrents suivants:

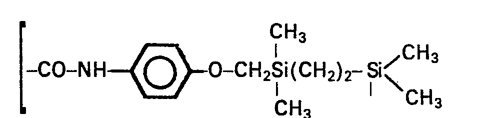

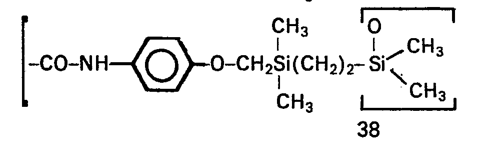

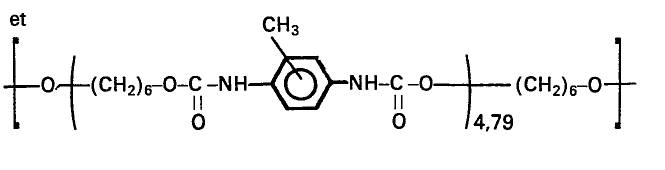

Dans un réacteur contenant 43 g de tétrachloroéthane on introduit les réactifs suivants:
bis α,ω[p-isocyanatophénylméthoxy [di- méthylsilyl- P-éthyl]]polydiméthylpolysiloxane 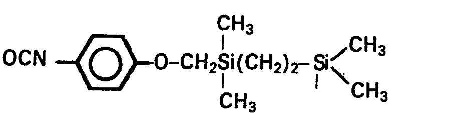 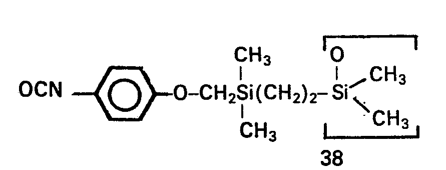 10,01 g (soit 0,00283 mole)
- hexanediol-1,6 1,934 g (soit 0,01639 mole)
- diisocyanato toluène (80/20) 2,355 g (soit 0,01353 mole)

On calcule ainsi que le nombre r est égal à 0276 et que le rapport NCO/OH est égal à 1,102. Le réacteur est purgé et maintenu sous atmosphère d'azote puis chauffé sous agitation durant 18 heures à 130 °C. On constate que le mélange demeure homogène pendant toute la durée de l'opération.

Le copolymère est isolé par évaporation du solvant à l'étuve.

Après moulage par compression on obtient des plaques transparentes de 2 mm d'épaisseur et qui présentent les propriétés suivantes: et
- résistance à la rupture à 20°: 45 kg/cm²
- allogement à la rupture à 20°: 159%

### Exemple 7

Préparation du copolymère séquencé constitué par un enchaînement des motifs récurrents suivants:

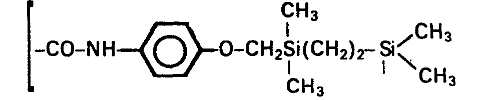

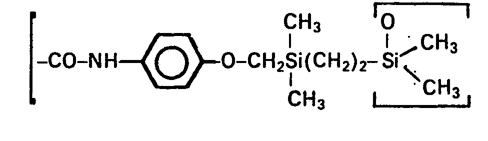

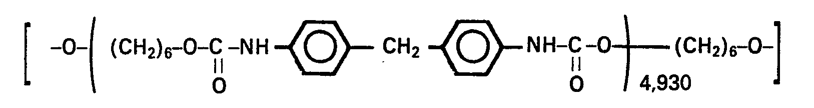

Dans un réacteur contenant 75,05 g d'o-dichlorobenzène; on introduit les réactifssuivants:
bis α,ω[p-isocyanatophénylméthoxy[diméthyl- silyl- βéthyl]] polydiméthylpolysiloxane 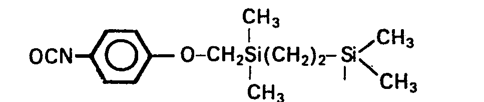 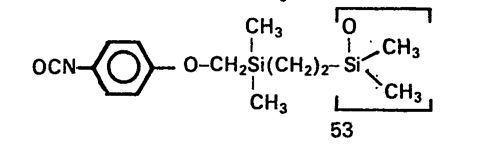 18,746 g (soit 0,00407 mole)

- hexanediol-1,6 2,863 g (soit 0,02426 mole)
- bis-isocyanato-4,4' diphénylméthane 3,384 g (soit 0,02014 mole)

On calcule ainsi que le nombre r est égal à 0,168 et que le rapport NCO/OH est égal à 0,998.

Le réacteur est purgé et maintenu sous atmosphère d'azote puis chauffé sous agitation durant 18 heures 30 minutes à 125°-130 °C. On constate que le mélange demeure homogène pendant toute la durée de l'opération.

Le copolymère est isolé par précipatation par addition d'acétone.

On obtient après moulage par compression des plaques transparentes de 2 mm d'épaisseur et qui présentent les propriétés suivantes:
- résistance à la rupture à 20°: 85 kg/cm²
- allongement à la rupture à 20°: 332%
- dureté shore A: 70.

### Exemple 8

Préparation du copolymère séquencé constitué par un enchaînement des motifs récurrents suivants:

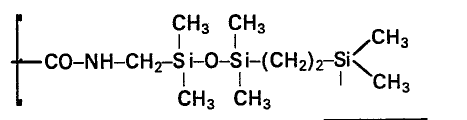

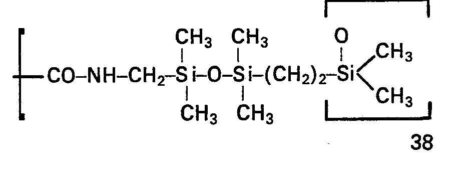

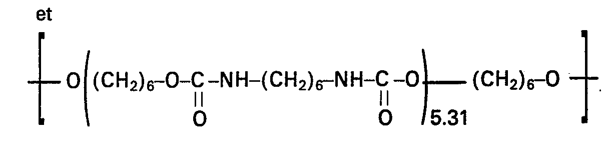

Dans un réacteur contenant 77,4 g d'o-dichlorobenzène; on introduit les réactifs suivants: macrodiisocyanate polysiloxanique 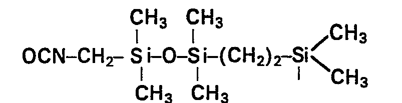 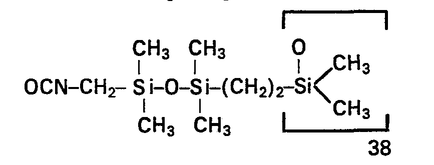 18,067 g (soit 0,00472 mole)
- hexanediol-1,6 3,520 g (soit 0,02983 mole)
- diisocyanato-16 hexane 4215 g (soit 0,02509 mole)

On calcule ainsi que le nombre r est égal à 0,158 et que le rapport NCO/OH est égal à 0,999. Le réacteur est purgé et maintenu sous atmosphère d'azote puis chauffé sous agitation durant 18 heures 30 minutes à 130 °C. On constate que le mélange devient trouble après 10 minutes de condensation. et

Le copolymère est isolé par précipitation par addition d'acétone.

Après moulage par compression on obtient des plaques transparentes de 2 mm d'épaisseur et qui présentent les propriétés suivantes:
- résistance à la rupture à 20°: 52 kg/cm²
- allongement à la rupture à 20°: 150%

### Exemple 9

Préparation du copolymère séquencé constitué par un enchaînement des motifs récurrents suivants:

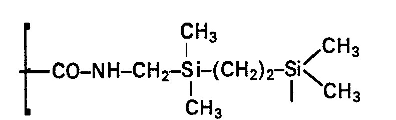

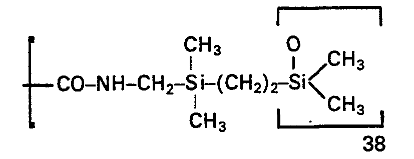

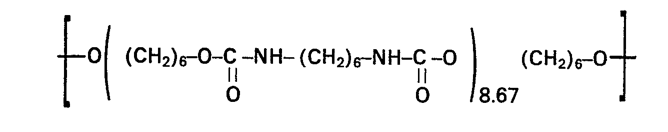

Dans un réacteur contenant 81,6 g d'o-dichlorobenzène; on introduit les réactifs suivants:
macrodiisocyanate polysiloxanique 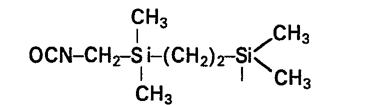 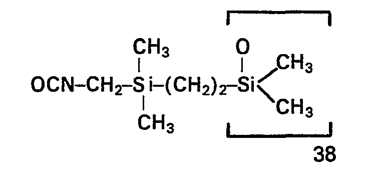 16,328 g (soit 0,00419 mole)

- hexanediol-1,6 4,787 g (soit 0,04057 mole)
- diisocyanato-1,6 hexane 6,107 g (soit 0,03635 mole)

On calcule ainsi que le nombre r est égal à 0,103 et que le rapport NCO/OH est égal à 0,999.

Le réacteur est purgé et maintenu sous atmosphère d'azote puis chauffé sous agitation durant 18 heures à 130 °C. On constate que le mélange devient trouble après 1 heure 20 minutes de réaction.

Le copolymère est isolé par précipitation par addition d'acétone; on obtient des flocons élastiques moulables par compression.

On place ainsi dans un moule paralléllipédique (L = 60 mm, 1 = 60 mm, h = 2 mm) 8 à 9 g de copolymère sec; le moule est alors mis sous presse pendant 10 à 15 minutes à 180 °C. Après moulage par compression on obtient des plaques transparentes de 2 mm d'épaisseur et qui présentent les propriétés suivantes:
- résistance à la rupture à 20°: 30 kg/cm²
- allongement à la rupture à 20°: 62%

### Exemple 10

Préparation du copolymère séquencé constitué par un enchaînement des motifs récurrents suivants: 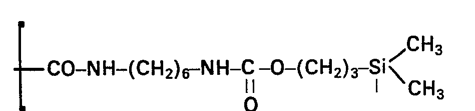 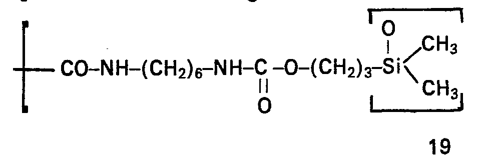 et

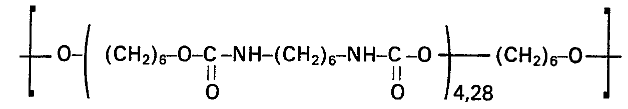

### A- Préparation du copolymère

Dans un réacteur contenant 94 g d'o-dichlorobenzène; on introduit les réactifs suivants: macrodiol polysiloxanique:
α,ω bis (γ -hydroxypropyl) polyméthylpolysil- oxane: 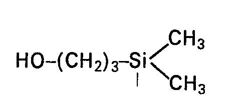 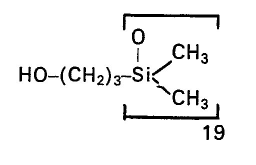 15,364 g (soit 0,00942 mole)

- hexanediol-1,6 5,880 g (soit 0,04983 mole)
- diisocyanate-1,6 hexane 9,955 g (soit 0,05925 mole)

On calcule ainsi que le nombre r est égal à 0,159 et que le rapport NCO/OH est égal à 1,000. Le réacteur est purgé et maintenu sous atmosphère d'azote puis chauffé sous agitation durant 16 heures 50 minutes à 130-135 °C. On constate que le mélange devient légèrement trouble en fin d'opération.

Le copolymère est isolé par précipitation par addition de méhanol.

Après moulage par compression on obtient des plaques transparentes de 2 mm d'épaisseur et qui présentent les propriétés suivantes:
- résistance à la rupture à 20°: 172 kg/cm²
- allogenemtn à la rupture à 20°: 142%
- dureté shore A: 94
B - Préparation de l'α,ω bis (γ-hydroxypropyl) polydiméthylsiloxane

Dans un ballon on charge les réactifs suivants:
- huile α,ω dihydrogénopoly- diméthylpolysiloxane 41,8 g
- alcool allylique 5,25 g
- toluène 15,4 g on chauffe la masse réactionnelle à 100°C, puis introduit le catalyseur constitué par une solution d'acide chloroplatinique à 0,06% de Pt dans l'éthylhexanol (1,4 ml). La réaction est totale au bout d'une heure à 120-125 °C. Après dévolatilisation sous pression réduite (1 heure à 100°C sous un vide de 1,3-10-² mbar (0,01 mm Hg) on obtient une huile dont la teneur en groupements OH correspond à la formule attendue.

### Exemple 11

Préparation du copolymère séquencé constitué par un enchaînement des motifs récurrents suivants: 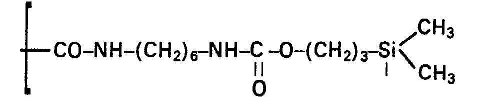 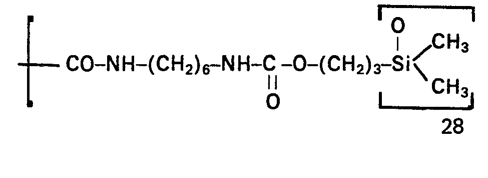 et

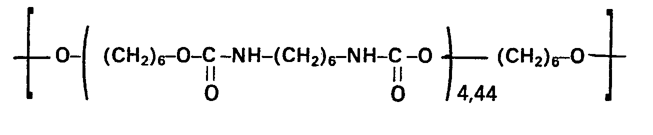

Dans un réacteur contenant 128 g d'o-dichlorobenzène; on introduit les réactifs suivants: macrodiol polysiloxanique:
α,ω bis[γ -hydroxypropyl] polydiméthylpolysiloxane: 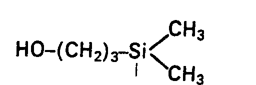 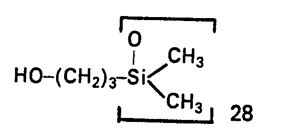 25,637 g (soit 0,00990 mole)

- hexanediol-1,6 6,366 g (soit 0,05395 mole)
- diisocyanato-1,6 hexane 10,726 g (soit 0,06384 mole)

On calcule ainsi que le nombre r est égal à 0,155 et que le rapport NCO/OH est égal à 1,000. Le réacteur est purgé et maintenu sous atmosphère d'azote puis chauffé souss agitation durant 17 heures 15 minutes à 130-138 °C. On constate que le mélange se trouble légèrement en fin d'opération.

Le copolymère est isolé par précipitation par addition de méthanol.

Après moulage par compression on obtient des plaques transparentes de 2 mm d'épaisseur et qui présentent les propriétés suivantes: et
- résistance à la rupture à 20°: 100 kg/cm2
- allongement à la rupture à 20°: 123%
- dureté shore A: 91

### Exemple 12

Préparation du copolymère séquencé constitué par un enchaînement des motifs récurrents suivants:

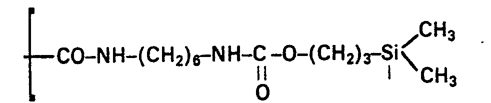

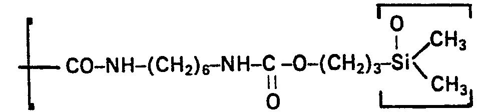

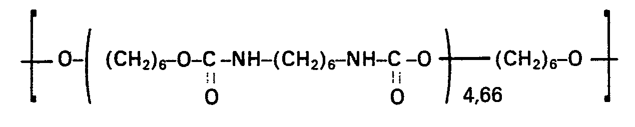

Dans un réacteur contenant 20 g d'o-dichlorobenzène; on introduit les réactifs suivants: macrodiol polysiloxanique:
a,w bis[y -hydroxypropyl] polydiméthylpolysiloxane: 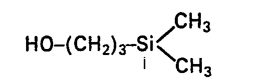 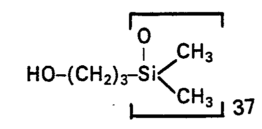 16,416 g (soit 0,00494 mole)
et le diisocyanato-1,6 hexane 5,532 g (soit 0,03293 mole).

On laisse réagir pendant 4 heures 40 minutes à 130 °C, puis ajoute 55 g orthodichlorobenzène et l'hexanediol-1,6 soit 3,302 g (0,02798 mole) puis chauffe à nouveau durant 13 heures 25 minutes à 130-135 °C.

On calcule ainsi que le nombre r est égal à 0,150 et que le rapport NCO/OH est égal à 0,999. et

On constate que le mélange demeure homogène pendant toute la durée de l'opération.

Le copolymère est isolé par précipitation par addition de méthanol.

Après moulage par compression on obtient des plaques transparentes de 2 mm d'épaisseur et qui présentent les propriétés suivantes:
- résistance à la rupture à 20°: 76 kg/cm²
- allongement à la rupture à 20°: 136%
- dureté shore A: 86

### Exemple 13

Préparation du copolymère séquencé constitué par un enchaînement des motifs récurrents suivants:

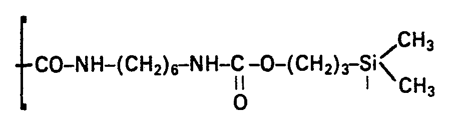

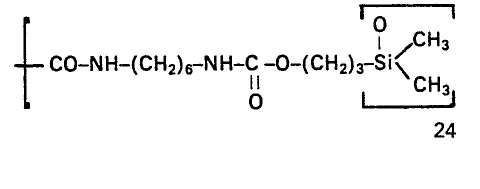

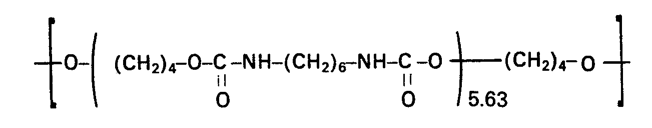

Dans un réacteur contenant 94 g d'o-dichlorobenzène; on introduit les réactifs suivants:
macrodiol polysiloxanique:
   α,ω bis[γ-hydroxypropyl] polydiméthylpolysiloxane: 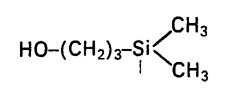 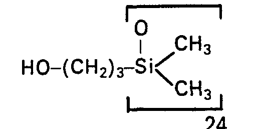 17,241 g (soit 0,00753 mole)

- butanediol-1,4 4,479 g (soit 0,04977 mole)
- diisocyanato-1,6 hexane 9,625 g (soit 0,05729 mole)

On calcule ainsi que le nombre r est égal à 0,131 et que le rapport NCO/OH est égal à 1,000. Le réacteur est purgé et maintenu sous atmosphère d'azote puis chauffé sous agitation durant 17 heures à 135-137 °C. On constate que le mélange se trouble légèrement en fin d'opération.

Le copolymère est isolé par précipitation par addition de méthanol. et

Après moulage par compression on obtient des plaques transparentes de 2 mm d'épaisseur et qui présentent les propriétés suivantes:
- résistance à la rupture à 20°: 127 kg/cm²
- allongement à la rupture à 20°:121 %
- dureté shore A: 93

### Exemple 14

Préparation ou copolymère séquencé constitué par un enchaînement des motifs récurrents suivants:

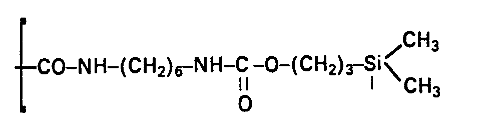

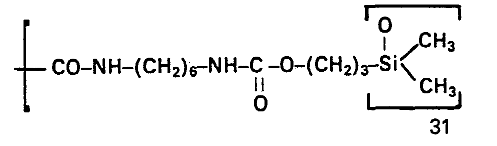

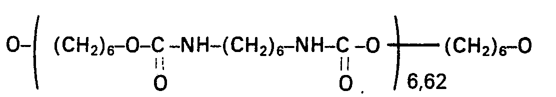

Dans un réacteur contenant 33 g d'o-dichlorobenzène; on introduit les réactifs suivants: macrodiol polysiloxanique:
α,ω bis[γ -hydroxypropyl] polydiméthylpolysiloxane: 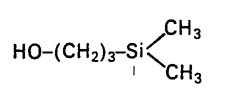 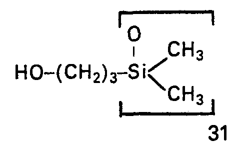 18,850 g (soit 0,00659 mole)
et le diisocyanato-1,6 hexane 9,522 g (soit 0,05668 mole).

On laisse régair pendant 1 heure à 126-130 °C, puis ajoute 70 g d'orthodichlorobenzène et l'hexanediol-1,6 soit 5,911 g (0,05009 mole) puis chauffe à nouveau durant 2 heures à 130-132 °C après avoir ajouté un catalyseur d'uréthanisation à raison de 0,2% (dilaurate de diméthylétain)

### Motif A (formule (A) )

On calcule ainsi que le nombre r est égal à 0,116 et que le rapport NCO/OH est égal à 1,000.

On constate que le mélange demeure homogène pendant toute la durée de l'opération.

Le copolymére est isolé par précipitation par addition de méthanol.

Après moulage par compression on obtient des plaques transparentes de 2 mm d'épaisseur et qui présentent les propriétés suivantes:
- résistance à la rupture à 20°: 107 kg/cm²
- allongement à la rupture à 20°: 162%
- dureté shore A: 91

## Revendications

1. Copolymère séquencés organopolysiloxaniques et polyuréthannes caractérisés en ce que lesdits copolymères sont des copolymères élastomériques thermoplastiques présentant en outre des propriétés thermomécaniques améliorées st un module élastique sensiblement constant dans une plage de température comprise entre la température ambiante et 160 °C et en ce qu'ils sont constitués par un enchaînement de motifs récurrents A et B ayant respectivement pour formule:

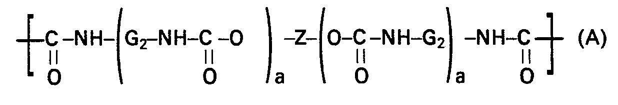

Motif B (formule (B) ) 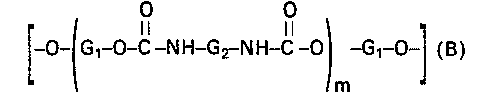 les divers symboles ayant les significations suivantes:
· Z représente un radical divalent porteur d'un bloc polysiloxanique et ayant pour formule: 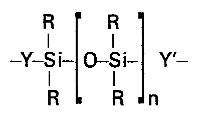 les divers symboles Y, Y' R, et n représentant respectivement:
· Y un radical divalent inerte de nature hydrocarboné et choisi parmi les groupements suivants: 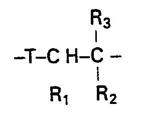 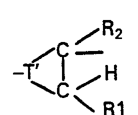 T et T' représentant respectivement des radicaux divalents et trivalents inertes faisant partie de l'édifice moléculaire d'isocyanate insaturé ou d'alcool insaturé de formule: 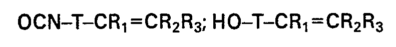 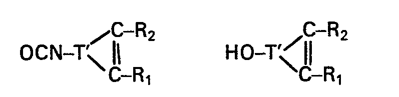 ces radicaux T et T'étant de nature hydrocarbonée et comportant de 1 à 20 atomes de carbone et pouvant éventuellement renfermer un ou plusieurs hétéroatomes ou groupement choisis parmi les atomes d'oxygène, de soufre, de silicium et d'azote, les groupements ester ou amide; les symboles R₁, R₂, R₃ représentant un atome d'hydrogène, un groupement alkyle ou aryle, les deux radicaux R₁ et R₂ pouvant ensemble constituer un radical alkylène.
· Y' un groupement ayant la même signification que le groupement Y.
. R des radicaux identiques ou différents choisis parmi:
- Les radicaux alkyle ou halogénoalkyle ayant de 1 à 5 atomes de carbone et comportant de 1 à 7 atomes de chlore et /ou de fluor.
- Les radicaux cycloalkyle ou halogènocy- cloalkyle ayant de 3 à 8 atomes de carbone et contenant de 1 à 4 atomes de chlore et/ou de fluor.
- Les radicaux aryle, alkylaryle et halogènoaryle ayant de 6 à 8 atomes de carbone et contenant de 1 à 4 atomes de chlore et/ou de fluor.
- les radicaux cyano-alkyle ayant de 3 à 4 atomes de carbone.
n un nombre égal ou supérieur à 10.
· G₁ G₂ des radicaux divalents de nature hydrocarbonée correspondant respectivement au diol G₁ (OH)₂ et au diisocyanate G₂ (NCO)₂, G₁, et G₂ ayant de 2 à 20 atomes de carbone.
· m un nombre compris entre 1 et 20
. a zéro ou 1.

2. Copolymères séquencés selon la revendication 1, caractérisé en ce qu'ils sont constitués par un enchaînement de motifs récurrents A et B, les divers symboles ayant les significations suivantes:
. T représentant l'un des groupements suivants:
- Un groupement purement hydrocarboné alkylène, cycloalkylène, arylène, alkylarylène ou arylalkylène.
- un enchaînement de deux groupements choisis parmi les groupements alkylène, cycloalkylène et arylène et reliés entre eux par le lien valentiel, un atome d'oxygène, un atome de soufre, un groupement ester ou amide, un groupement azoté 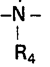 R₄ représentant un atome d'hydrogène ou un groupement alkyle, un groupement diorganosilyle de formule: 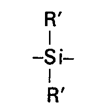
R' représentant un radical, méthyle, vinyle ou phényle. Ces divers radicaux étant éventuellement halogénés.
· T' un groupement alkane triyle, cycloalkane triyle, alkylcycloalkanetriyle.
R₁ R₂ R₃ un atome d'hydrogène, un radical alkyle ayant de 1 à 4 atomes de carbone, un radical phényle ou tolyle, R₁ et R₂ pouvant constituer ensemble un radical divalent alkylène droit ou ramifié ayant de 2 à 6 atomes de carbone.
· G₁ des radicaux alkylène ayant de 2 à 12 atomes de carbone, des radicaux cyclohexylène ou cyclohexylène ou cyclopentylène, un ensemble de 2 groupements choisis parmi les groupements alkyléne ayant de 2 à 12 atomes de carbone ou les radicaux cyclohexylène ou cyclopentylène, reliés entre eux par le lien valentiel, un atome d'oxygène, un groupement alkylène ou alkylidène ayant de 1 à 4 atomes de carbone.
· G₂ des radicaux alkylène ayant de 2 à 12 atomes de carbone, des radicaux cyclohexylène ou cyclopentylène, phénylène, méthylphénylène ou diméthylphényléne ou encore un sensemble de deux groupements choisis parmi les groupements alkylène ayant de 2 à 12 atomes de carbone, les radicaux cyclohexylène, cyclopentylène, phénylène, méthylphénylène ou diméthylphénylène relié entre eux par le lien valentiel, un atome d'oxygène, un groupement alkylène ou alkylidène ayant de 1 à 4 atomes de carbone.
n un nombre compris entre 10 et 80
m un nombre compris entre 4 et 10
· a et R ayant les significations préalablement données dans la revendication 1.

3. Copolymères selon l'une des revendications 1 et 2, caractérisés en ce que les divers symboles ont les significations suivantes:
. T représentant l'un des groupements suivants:
- un groupement alkylène ayant au plus 12 atomes de carbone, un groupement cyclopentylène ou cyclohexylène, un groupement phénylène, méthylphénylène ou diméthylphénylène.
- un ensemble de deux groupements choisis parmi les groupements alkylène ayant de 2 à 12 atomes de carbone, cyclohexylène, cyclopentylène, phénylène, méthylphénylène, diméthylphénylène, les deux groupements de l'ensemble étant reliés par le lien valentiel ou par l'un des hétéroatomes ou groupements suivants: 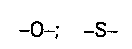 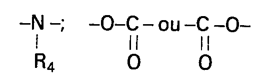 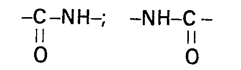 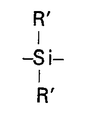 R₄ représentant un atome d'hydrogène ou un groupement alkyle ayant de 1 à 4 atomes de carbone, et R' représentant un groupement méthyle, vinyle ou phényle.
. T' le groupement 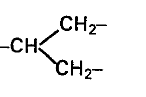
R₁, R₂, R₃ un atome d'hydrogène ou un groupement méthyle, éthyle, ou phényle, les deux radicaux R₁ et R₂ pouvant constituer ensemble un groupement triméthylène ou tétraméthylène.
. R un radical méthyle, vinyle ou phényle, ces radicaux pouvant éventuellement être substitués par 1 à 4 atomes de chlore et/ou de fluor.
· G₁ Des radicaux alkylène ayant de 2 à 6 atomes de carbone, des radicaux cyclopentylène, cyclohexylène, ou encore un ensemble de 2 groupements choisis parmi les groupements alkylène ayant de 2 à 6 atomes de carbone; les radicaux cyclohexylène ou cyclopentylène reliés entre eux par le lien valentiel, un atome d'oxygène, un groupement méthylène.
. G₂ Des radicaux alkylène ayant de 2 à 6 atomes de carbone, des radicaux cyclopentylène, cyclohexylène, phényléne ou méthylphénylène ou encore un ensemble de 2 groupements choisis parmi les groupements alkylène ayant de 2 à 6 atomes de carbone, les radicaux cyclohexylène, cyclopentylène, phénylène, méthylphénylène reliés entre eux par le lien valentiel, un atome d'oxygène , un groupement méthylène.
Les autres symboles n, a, m ayant les significations préalablement données dans la revendication 2.

4. Copolymères selon l'une des revendications 1 à 3, caractérisés en ce que les divers symboles ont la signification suivante:
. Y représentant le groupement divalent suivant: 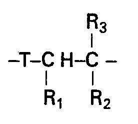 T, représentant soit un groupement alkylène ayant au plus 12 atomes de carbone, un groupement cyclopentylène, cyclohexylène, phénylène ou méthylphénylène, soit un ensemble de deux groupements choisis parmi les groupements alkylène ayant de 2 à 12 atomes de carbone, cyclohexylène, cyclopentylène, les deux groupements étant reliés par le lien valentiel ou par l'un des hétéroatomes ou groupements suivants: 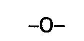 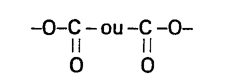 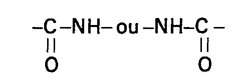 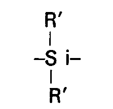
R' représentant un groupement méthyle.
· R_{1'} R₂, R₃ un atome d'hydrogène, un groupement méthyle, éthyle ou phényle, les deux radicaux R₁ et R₂ pouvant constituer ensemble un groupement triméthylène ou tétraméthylène.
R Un radical méthyle.
· G₁ Un radical alkylène droit ayant de 4 à 6 atomes de carbone.
- G₂ Des radicaux alkylène ayant de 2 à 6 atomes de carbone, des radicaux cyclopentylène, cyclohexylène, phénylène ou un ensemble de 2 groupements choisis parmi les groupements alkylène ayant de 2 à 6 atomes de carbone, cyclohexylène, cyclopentylène.
Les autres symboles n, a, m ayant les significations préalablement données dans la revendication 3.

5. Procédé d'obtention des copolymères séquencés organopolysiloxaniques et polyuréthannes selon les revendications 1 à 4, caractérisé en ce que l'on fait réagir dans un milieu solvant constitué par un hydrocarbure halogéné un composé difonctionnel de formule: (I) X-Z-X' (I) avec au moins un diol de formule (II) HO-G_{L}-OH et avec au moins un diisocyanate de formule (III) OCN-G₂-NCO, les symboles X et X' identiques représentant un groupement hydroxyle ou un groupement isocyanate les divers symboles Z, Gᵢ, G₂ ayant les significations données dans l'une des revendications 1 à 4, les composés de formule (1), (II) et (III) étant introduits en quantité telle que le rapport de l'ensemble des groupements NCO par rapport à l'ensemble des groupements OH soit compris entre 0,9 et 1,1 et en ce que le rapport molaire r = composé (X-Z-X') / composé antagoniste (II) ou (III) soit comprise entre 0,045 et 0,5, le composé antagoniste étant tel qu'il réagisse avec le composé (I) pour former les deux groupes uréthannes de jonction.

6. Procédé, selon la revendication 5, caractérisé en ce que le rapport NCO/OH est compris entre 0,95 et 1,05 et en ce que le rapport r est compris entre 0,08 et 0,170.

7. Procédé, selon l'une des revendications 5 ou 6, caractérisé en ce que X représente un groupement isocyanate.

8. Procédé selon l'une des revendications 5 ou 6, caractérisé en ce que X représente un groupement hydroxyle.

9. Procédé selon l'une des revendications 5 à 9, caractérisé en ce que le solvant est l'o-dichlorobenzène ou le tétrachloroéthane.

10. Procédé selon l'une quelconque des revendications 5, 6, 8 et 9, caractérisé en ce qu'au cours d'une première étape on fait régagir le composé difonctionnel de formule (I): 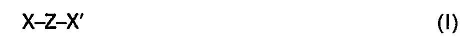 dans lequel X et X' représentent chacun un groupe hydroxyle avec au moins une partie d'au moins un diisocyanate de formule (III): 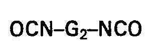 pour obtenir un produit intermédiaire macrodiisocyanate porteur dudit bloc polysiloxanique Z, et, au cours d'une deuxième étape on fait régair ledit produit intermédiaire macrodiisocyanate avec au moins un diol de formule (II) 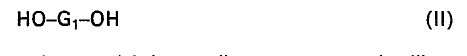 et la quantité éventuellement restante du diisocyanate de formule (III) en vue d'obtenir ledit copolymère séquencé organopolysiloxane/polyuré- thanne.

## Patentansprüche

1. Blockcopolymere mit Organopolysiloxan-und Polyurethanblöcken, dadurch gekennzeichnet, dass diese Copolymeren thermoplastische elastomere Copolymere sind, die darüber hinaus verbesserte thermomechanische Eigenschaften und einen Elastizitätsmodul, der in einem Temperaturbereich zwischen Umgebungstemperatur und 160 °C im wesentlichen konstant ist, aufweisen, und dass sie aus Verkettungen mit wiederkehrenden Einheiten A und B bestehen, die jeweils folgende Formel haben:
Einheit A (Formel (A) ) 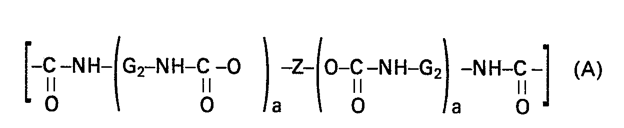 Einheit B (Formel (B) ) 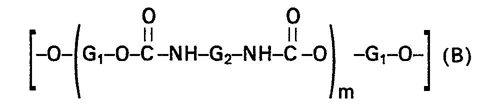 wobei die verschiedenen Symbole die folgenden Bedeutungen haben:
. Z bedeutet einen zweiwertigen Trägerrest eines Polysiloxanblocks der Formel: 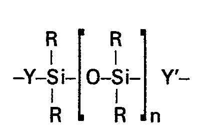 wobei die verschiedenen Symbole Y, Y', R und n bedeuten:
. Y einen zweiwertigen inerten Rest von Kohlenwasserstoffnatur und ausgewählt unter den folgenden Gruppierungen: 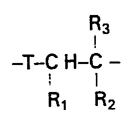 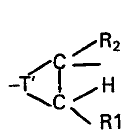
T und T' bedeuten jeweils zweiwertige und dreiwertige inerte Reste, die Teil eines Molekularaufbaus von ungesättigtem Isocyanat oder ungesättigtem Alkohol der Formel 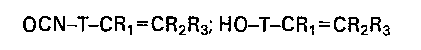 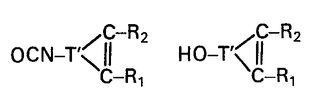 sind, wobei diese Reste T und T' von Kohlenwasserstoffnatur sind und 1 bis 20 Kohlenstoffatome tragen und gegebenenfalls ein oder mehrere Heteroatome oder Gruppierungen ausgewählt unter den Sauerstoff-, Schwefel-, Silicium- und Stickstoffatomen, Ester- oder Amidgruppierungen einschliessen können; die Symbole R₁, R₂, R₃ bedeuten ein Wasserstoffatom, eine Alkyl- oder Arylgruppe, wobei die beiden Reste R₁ und R₂ zusammen einen Alkylenrest bilden können,
. Y' eine Gruppierung mit derselben Bedeutung wie die Gruppe Y.
. R identische oder verschiedene Reste ausgewählt aus:
- den Alkyl- oder Halogenalkylresten mit 1 bis 5 Kohlenstoffatomen und mit 1 bis 7 Chlor-und/oder Fluoratomen;
- den Cycloalkyl- oder Halogencycloalkylresten mit 3 bis 8 Kohlenstoffatomen und enthaltend 1 bis 4 Chlor- und/oder Fluoratome;
- den Aryl-, Alkylaryl- und Halogenarylresten mit 6 bis 8 Kohlenstoffatomen und enthaltend 1 bis 4 Chlor- und/oder Fluoratome;
- den Cyanoalkylresten mit 3 bis 4 Kohlenstoffatomen.
· n eine Zahl gleich oder höher als 10.
· G₁ G₂ zweiwertige Reste von Kohlenwasserstoffnatur entsprechend dem Diol G, (OH)2 oder dem Diisocyanat G₂ (NCO)₂, wobei G, und G₂ 2 bis 20 Kohlenstoffatome haben.
m eine Zahl zwischen 1 und 20.
a Null oder 1.

2. Blockcopolymere gemäss Anspruch 1, dadurch gekennzeichnet, dass sie aus einer Verkettung von wiederkehrenden Einheiten A und B bestehen, wobei die verschiedenen Symbole die folgenden Bedeutungen haben:
· T bedeutet eine der folgenden Gruppen:
- einer nur aus Kohlenwasserstoff bestehende Gruppe Alkylen, Cycloalkylen, Arylen, Alkylarylen oder Arylalkylen;
- eine Verkettung von zwei Gruppen ausgewählt unter den Alkylen-, Cycloalkylen- und Arylengruppen und untereinander verbunden durch die Valenzbindung, ein Sauerstoffatom, ein Schwefelatom oder eine Ester- oder Amidgruppe, eine Stickstoffgruppe 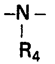 wobei R₄ ein Wasserstoffatom oder eine Alkylgruppe bedeutet eine Diorganosilylgruppe der Formel 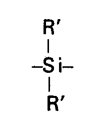 wobei R' einen Methyl-, Vinyl- oder Phenylrest darstellt, wobei diese verschiedenen Reste gegebenenfalls halogeniert sind.
. T'eine Alkantriyl-, Cycloalkantriyl-, Alkylcycloalkantriylgruppe.
· R₁ R₂ R₃ ein Wasserstoffatom; ein Alkylrest mit 1 bis 4 Kohlenstoffatomen, ein Phenyl- oder Tolylrest, wobei R₁ und R₂ zusammen einen geraden oder verzweigten zweiwertigen Alkylenrest mit 2 bis 6 Kohlenstoffatomen darstellen kann.
· G₁ Alkylenreste mit 2 bis 12 Kohlenstoffatomen, Cyclohexylen- oder Cyclohexylen- oder Cyclopentylenreste, eine Einheit von zwei Gruppierungen ausgewählt unter Alkylengruppen mit 2 bis 12 Kohlenstoffatomen oder Cyclohexylen-oder Cyclopentylenresten, die untereinander durch die Valenzbindung, ein Sauerstoffatom, eine Alkylen- oder Alkylidengruppe mit 1 bis 4 Kohlenstoffatomen verbunden sind.
. G₂ Alkylenreste mit 2 bis 12 Kohlenstoffatomen, Cyclohexylen- oder Cyclopentylenreste, Phenylen, Methylphenylen oder Dimethylphenylen oder auch eine Einheit von zwei Gruppen ausgewählt unter Alkylengruppen mit 2 bis 12 Kohlenstoffatomen, den Cyclohexylen-, Cyclopentylen-, Phenylen-, Methylphenylen-oder Dimethylphenylenresten, die untereinander durch die Valenzbindung, ein Sauerstoffatom, eine Alkylen- oder Alkylidengruppe mit 1 bis 4 Kohlenstoffatomen verbunden ist.
n eine Zahl zwischen 10 und 80.
· m eine Zahl zwischen 4 und 10.
· a und R haben die vorstehend in Anspruch 1 angegebenen Bedeutungen.

3. Copolymere gemäss den Ansprüchen 1 und 2, dadurch gekennzeichnet, dass die verschiedenen Symbole die folgenden Bedeutungen haben:
· T bedeutet eine der folgenden Gruppen:
- eine Alkylengruppe mit höchstens 12 Kohlenstoffatomen eine, Cyclopentylen- oder Cyclohexylengruppe, eine Phenylen-, Methylphenylen- oder Dimethylphenylengruppe;
- eine Einheit von zwei Gruppen ausgewählt unter den Alkylengruppen mit 2 bis 12 Kohlenstoffatomen, Cyclohexylen-, Cyclopentylen-, Phenylen-, Methylphenylen-, Dimethylphenylengruppen, wobei die beiden Gruppen der Einheit durch die Valenzbindung oder durch eines der folgenden Heteroatome oder Gruppen verbunden sind: 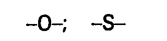 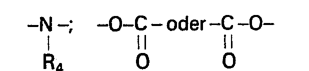 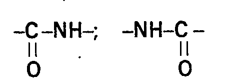 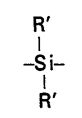 wobei R₄ ein Wasserstoffatom oder eine Alkylgruppe mit 1 bis 4 Kohlenstoffatomen bedeutet, und R' eine Methyl-, Vinyl- oder Phenylgruppe darstellt.
. T' die Gruppe 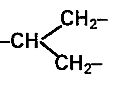
· R₁ R₂, R₃ ein Wasserstoffatom oder eine Methyl-, Ethyl- oder Phenylgruppe, wobei die beiden Reste R₁ und R₂ zusammen eine Trimethylen- oder Tetramethylengruppe darstellen können.
· R ein Methyl-, Vinyl- oder Phenylrest, wobei diese Reste gegebenenfalls durch 1 bis 4 Chlor-und/oder Fluoratome substituiert sein können.
. G, Alkylenreste mit 2 bis 6 Kohlenstoffatomen, Cyclopentylen-, Cyclohexylenreste, oder auch eine Einheit von 2 Gruppen ausgewählt unter den Alkylengruppen mit 2 bis 6 Kohlenstoffatomen; den Cyclohexylen- oder Cyclopentylenresten, die untereinander durch die Valenzbindung, ein Sauerstoffatom oder eine Methylengruppe verbunden sind.
. G₂ Alkylenreste mit 2 bis 6 Kohlenstoffatomen, Cyclopentylen-, Cyclohexylen-, Phenylen-oder Methylphenylenreste, oder auch eine Einheit von 2 Gruppen ausgewählt unter den Alkylengruppen mit 2 bis 6 Kohlenstoffatomen, den Cyclohexylen-, Cyclopentylen-, Phenylen-, Methylphenylenresten, die untereinander durch die Valenzbindung, ein Sauerstoffatom oder eine Methylengruppe verbunden sind, wobei die anderen Symbole n, a und m die vorstehend in Anspruch 2 angegebenen Bedeutungen besitzen.

4. Copolymere gemäss einem der Ansprüche 1 bis 3, dadurch gekennzeichnet, dass die verschiedenen Symbole die folgende Bedeutung haben:
. Y bedeutet die folgende zweiwertige Gruppe: 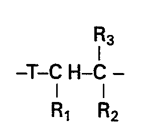 wobei T entweder eine Alkylengruppe mit höchstens 12 Kohlenstoffatomen, eine Cyclopentylen-, Cyclohexylen- Phenylen- oder Methylphenylgruppe, oder eine Einheit von zwei Gruppen ausgewählt unter den Alkylengruppen mit 2 bis 12 Kohlenstoffatomen, Cyclohexylen-, Cyclopentylengruppen bedeuten, wobei die beiden Gruppen durch die Valenzbindung oder durch eines der folgenden Heteroatome oder Gruppen verbunden sind: 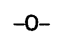 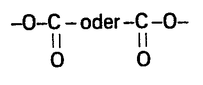 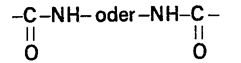 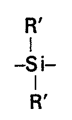 wobei R' eine Methylgruppe bedeutet.
· R₁ R₂, R₃ ein Wasserstoffatom, eine Methyl-, Ethyl- oder Phenylgruppe, wobei die beiden Reste R₁ und R₂ zusammen eine Trimethylen- oder Tetramethylengruppe bilden können.
R ein Methylrest.
· G₁ ein gerader Alkylenrest mit 4 bis 6 Kohlenstoffatomen.
· G₂ Alkylenreste mit 2 bis 6 Kohlenstoffatomen, Cyclopentylen-, Cyclohexylen-, Phenylenreste, oder eine Einheit von zwei Gruppen ausgewählt unter den Alkylengruppen mit 2 bis 6 Kohlenstoffatomen, Cyclohexylen-, Cyclopentylengruppen, wobei die anderen Symble n, a, m die vorstehend in Anspruch 3 angegebenen Bedeutungen besitzen.

5. Verfahren zur Herstellung der Blockcopolymeren mit Organopolysiloxan- und Polyurethanblöcken gemäss den Ansprüchen 1 bis 4, dadurch gekennzeichnet, dass man in einem Lösungsmittelmilieu, das aus einem halogenierten Kohlenwasserstoff besteht, eine difunktionelle Verbindung der Formel: 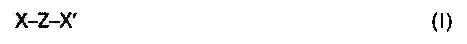 mit wenigstens einem Diol der Formel: 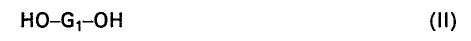 und mit wenigstens einem Diisocyanat der Formel: 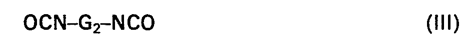 umsetzt, wobei die identischen Symbole X und X' eine Hydroxylgruppe oder eine Isocyanatgruppe darstellen, die verschiedenen Symbole Z, G₁, G₂, die in einem der Ansprüche 1 bis 4 angegebenen Bedeutungen besitzen, die Verbindungen der Formel (I), (II) und (III) in solcher Menge eingeführt werden, dass das Verhältnis der Gesamtheit der Gruppen NCO in Bezug auf die Gesamtheit der Gruppen OH zwischen 0,9 und 1,1 liegt, und dass das Molverhältnis r =Verbindung (X-Z-X') / antagonistische Verbindung (II) oder (III) zwischen 0,045 und 0,5 liegt, wobei die antagonistische Verbindung derart ist, dass sie mit der Verbindung (I) reagiert, um die zwei Verbindungsurethangruppen zu bilden.

6. Verfahren gemäss Anspruch 5 dadurch gekennzeichnet, dass das Verhätnis NCO/OH zwischen 0,95 und 1,05 liegt, und dass das Verhältnis rzwischen 0,08 und 0,170 liegt.

7. Verfahren gemäss einem der Ansprüche 5 oder 6, dadurch gekennzeichnet dass X eine lsocyanatgruppe bedeutet.

8. Verfahren gemäss einem der Ansprüche 5 oder 6, dadurch gekennzeichnet, dass X eine Hydroxylgruppe darstellt.

9. Verfahren gemäss einem der Ansprüche 5 bis 9, dadurch gekennzeichnet, dass das Lösungsmittel o-Dichlorbenzol oder Tetrachlorethan ist.

10. Verfahren gemäss einem der Ansprüche 5, 6, 8 und 9, dadurch gekennzeichnet, dass man im Verlaufe einer ersten Stufe die difunktionelle Verbindung der Formel (I): 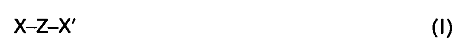 worin X und X' jeweils eine Hydroxylgruppe bedeuten, mit wenigstens einem Teil wenigstens eines Diisocyanats der Formel (III): 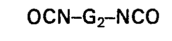 Unit A (formula (A) ) reagieren lässt, um ein Macrodiisocyanatzwischenprodukt zu erhalten, dass der Träger dieses Polysiloxanblocks Z ist, und man im Verlaufe einer zweiten Stufe dieses Macrodiisocyanatzwischenprodukt mit wenigstens Diol der Formel (11): 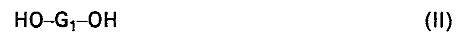 und der gegebenenfalls verbleibenden Menge des Diisocyanats der Formel (III) reagieren lässt, um das genannte Organopolysiloxan/Polyurethan-Blockcopolymere zu erzielen.

## Claims

1. Organopolysiloxane/polyurethane block copolymers, characterised in that the said copolymers are thermoplastic elastomeric copolymers which moreover possess improved thermomechanical properties and a modulus of elasticity which is substantially constant over a range of temperature between ambient temperature and 160 °C, and in that they consist of a chain of recurring units A and B which respectively have the following formulae: 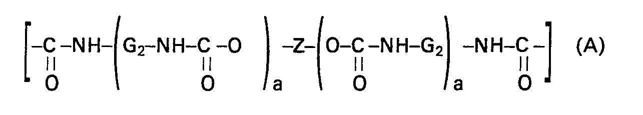 Unit B (formula (B) ) 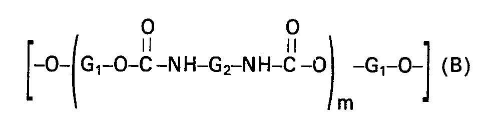 the various symbols having the following meanings:
Z represents a divalent radical which carries a polysiloxane block and has the formula: 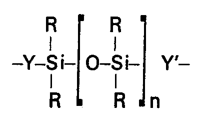 with the various symbols Y, Y', R and n respectively representing the following:
Y an inert divalent radical of hydrocarbon nature, chosen from among the following groups: 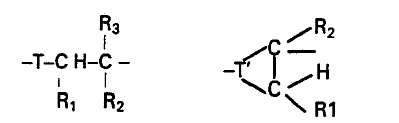 with T and T' respectively representing inert divalent and trivalent radicals forming part of the molecular structure of an unsaturated isocyanate or of an unsaturated alcohol of the formula: 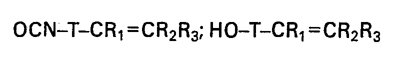 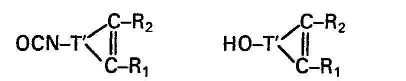 these radicals T and T' being of hydrocarbon nature and containing 1 to 20 carbon atoms, as well as optionally containing one or more hetero-atoms or groups chosen from among oxygen, sulphur, silicon and nitrogen atoms, ester groups or amide groups, and the symbols R₁, R₂ and R₃ representing a hydrogen atom or an alkyl or aryl group, or the two radicals R₁ and R₂ together forming an alkylene radical.
Y' a group having the same meaning as the group Y.
R identical or different radicals chosen from among:
alkyl or halogenalkyl radicals having from 1 to 5 carbon atoms and containing from 1 to 7 chlorine and/or fluorine atoms,
cycloalkyl or halogenocycloalkyl radicals having from 3 to 8 carbon atoms and containing from 1 to 4 chlorine and/or fluorine atoms,
aryl, alkylaryl and halogenoaryl radicals having from 6 to 8 carbon atoms and containing from 1 to 4 chlorine and/or fluorine atoms and
cyanoalkyl radicals having from 3 to 4 carbon atoms.
n a number equal to or greater than 10.
G, and G₂ divalent radicals of hydrocarbon nature, respectively corresponding to the diol G₁ (OH)₂ and to the diisocyanate G₂(NCO)₂, G, and G₂ having from 2 to 20 carbon atoms.
m a number between 1 and 20.
a zero or 1.

2. Block copolymers according to Claim 1, characterised in that they consist of a chain of recurring units A and B, the various symbols having the following meanings:
T represents one of the following groups:
a purely hydrocarbon alkylene, cycloalkylene, arylene, alkylarylene or arylalkylene group or
a chain of two groups chosen from among alkylene cycloalkylene and arylene groups and linked to one another by a valency bond, an oxygen atom, a sulphur atom, an ester or amide group or a nitrogen-containing group 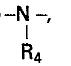 with R₄ representing a hydrogen atom or an alkyl group, or a diorganosilyl group of the formula: 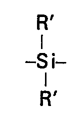 with R' representing a methyl, vinyl or phenyl radical, these various radicals being optionally halogenated.
T' represents an alkanetriyl, cycloalkanetriyl or alkylcycloalkanetriyl group.
R₁, R₂ and R₃ represent a hydrogen atom, an alkyl radical having from 1 to 4 carbon atoms or a phenyl or tolyl radical, and R, and R₂ can together form a straight or branched divalent alkylene radical having from 2 to 6 carbon atoms.
G, represents alkylene radicals having from 2 to 12 carbon atoms, cyclohexylene or cyclopentylene radicals, a combination of 2 groups chosen from among alkylene groups having from 2 to 12 carbon atoms or cyclohexylene or cyclopentylene radicals, linked to one another by a valency bond an oxygen atom or an alkylene or alkylidene group having from 1 to 4 carbon atoms.
G₂ represents alkylene radicals having from 2 to 12 carbon atoms, cyclohexylene or cyclopentylene radicals, phenylene, methylphenylene or dimethylphenylene radicals or a combination of two groups chosen from among alkylene groups having from 2 to 12 carbon atoms and cyclohexylene, cyclopentylene, phenylene, methylphenylene or dimethylphenylene radicals linked to one another by a valency bond, an oxygen atom or an alkylene or alkylidene group having from 1 to 4 carbon atoms.
n represents a number between 10 and 80,
m represents a number between 4 and 10 and
a and R have the meanings previously given in Claim 1.

3. Copolymers according to one of Claims 1 and 2, characterised in that the various symbols have the following meanings:
T represents one of the following groups:
an alkylene group having at most 12 carbon atoms, a cyclopentylene or cyclohexylene group or a phenylene, methylphenylene or dimethylphenylene group, or
a combination of two groups chosen from among alkylene groups having from 2 to 12 carbon atoms, cyclohexylene, cyclopentylene, phenylene, methylphenylene, and dimethylphenylene groups, the two groups of the combination being linked by a valency bond or by one of the following hetero-atoms or groups: 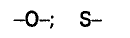 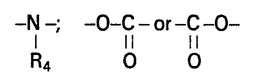 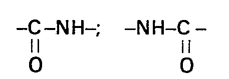 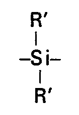
R₄ representing a hydrogen atom or an alkyl group having from 1 to 4 carbon atoms and R' representing a methyl, vinyl or phenyl group, T' represents the - 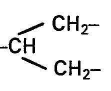 group,
R₁, R₂ and R₃ represent a hydrogen atom or a methyl, ethyl or phenyl group, and the two radicals R₁ and R₂ can together form a trimethylene or tetramethylene group,
R represents a methyl, vinyl or phenyl radical, these radicals being optionally substituted by 1 to 4 atoms of chlorine and/or fluorine,
G, represents alkylene radicals having from 2 to 6 carbon atoms, cyclopentylene or cyclohexylene radicals or a combination of 2 groups chosen from among alkylene groups having from 2 to 6 carbon atoms cyclohexylene or cyclopentylene radicals, linked to one another by a valency bond, an oxygen atom or a methylene group,
G₂ represents alkylene radicals having from 2 to 6 carbon atoms, cyclopentylene, cyclohexylene, phenylene or methylphenylene radicals or a combination of 2 groups chosen from among alkylene groups having from 2 to 6 carbon atoms, and cyclohexylene, cyclopentylene phenylene and methylphenylene radicals linked to one another by a valency bond, an oxygen atom or a methylene group, and
the other symbols n, a and m have the meanings previosuly given in Claim 2.
4. Copolymers according to one of Claims 1 to 3, characterised in that the various symbols have the following meaning:
Y represents the following divalent group: 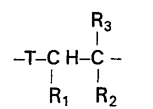
T representing either an alkylene group having at most 12 carbon atoms or a cyclopentylene, cyclohexylene, phenylene or methylphenylene group or a combination of two groups chosen from among alkylene groups having from 2 to 12 carbon atoms cyclohexylene and cyclopentylene, the two groups being linked by a valency bond or by one of the following hetero-atoms or groups: 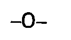 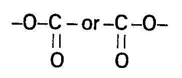 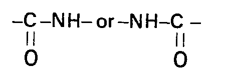 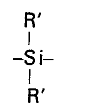
R' represents a methyl group,
R₁, R₂ and R₃ represent a hydrogen atom or a methyl, ethyl or phenyl group, and the two radicals Rᵢ and R₂ can together form a trimethylene or tetramethylene group,
R represents a methyl radical,
G, represents a straight alkylene radical having from 4 to 6 carbon atoms and
G₂ represents alkylene radicals having from 2 to 6 carbon atoms, cyclopentylene, cyclohexylene or phenylene radicals or a combination of 2 groups chosen from among alkylene groups having from 2 to 6 carbon atoms, cyclohexylene and cyclopentylene, and
the other symbols n, a and m have the meanings previously given in Claim 3.

5. Process for obtaining the organopolysiloxane and polyurethane block copolymers according to Claims 1 to 4, characterised in that, in a solvent medium consisting of a halogenated hydrocarbon, a difunctional compound of the formula 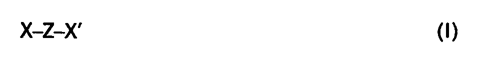 is reacted with at least one diol of the formula 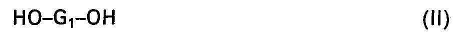 and with at least one diisocyanate of the formula 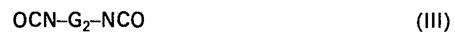 with the symbols X and X' being identical and representing a hydroxyl group or an isocyanate group and the various symbols Z, G₁ and G₂ having the meanings given in one of Claims 1 to 4, the compounds of the formula (I), (II) and (III) being introduced in such amount that the ratio of all the NCO groups relative to all the OH groups is between 0.9 and 1.1 and in that the molar ratio r = compound (X-Z-X') / antagonist compound (II) or (III) is between 0.045 and 0.5, the antagonist compound being such that it reacts with the compound (I) to form the two linking urethane groups.

6. Process according to Claim 5, characterised in that the ratio NCO/OH is between 0.95 and 1.05 and in that the ratio r is between 0.08 and 0.170.

7. Process according to one of Claims 5 or 6, characterised in that X represents an isocyanate group.

8. Process according to one of Claims 5 or 6, characterised in that X represents a hydroxyl group.

9. Process according to one of Claims 5 to 9 characterised in that the solvent is o-dichlorobenzene or tetrachloroethane.

10. Process according to any one of Claims 5, 6, 8 and 9, characterised in that during a first stage the difunctional compound of the formula (I) 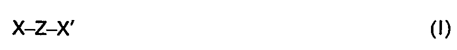 in which X and X' each represent a hydroxyl group, is reacted with at least a part of at least one diisocyanate of the formula (III) 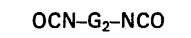 to obtain an intermediate macrodiisocyanate product carrying the said polysiloxane block Z and, during a second stage, the said intermediate macrodiisocyanate product is reacted with at least one diol of the formula (II) 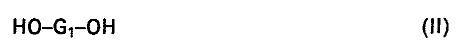 and with any remaining amount of the diisocyanate of the formula (III) in order to obtain the said organopolysiloxane/polyurethane block copolymer.
